# EUROPEAN PATENT SPECIFICATION

(11) **EP 4 481 000 B1**
(45) Date of publication and mention of the grant of the patent: **15.07.2026**
(21) Application number: 23756318.4
(22) Date of filing: 13.02.2023
(51) Int. Cl.: C08L 51/00, B29C 45/00, B29C 48/00, C08F 265/06, C08K 5/134, C08L 101/00

(54) **THERMOPLASTIC RESIN COMPOSITION, MOLDED MATERIAL, AND MOLDED BODY**
THERMOPLASTISCHE HARZZUSAMMENSETZUNG, GEFORMTE MASSE UND GEFORMTER KÖRPER
COMPOSITION DE RESINE THERMOPLASTIQUE, MATERIAU MOULÉ ET CORPS MOULÉ

(30) Priority: 15.02.2022 JP 2022021457
(43) Date of publication of application: 25.12.2024
(73) Proprietor: Mitsubishi Chemical Corporation, Tokyo 100-8251 (JP)
(72) Inventor: OTANI, Go, Tokyo 100-8251 (JP)
(74) Representative: Vossius & Partner Patentanwälte Rechtsanwälte mbB
(86) International application number: PCT/JP2023/004738
(87) International publication number: WO 2023/157793

(56) References cited:
- WO-A1-2013/099945
- JP-A- 2001 247 796
- JP-A- 2013 200 334
- JP-A- 2015 218 231
- JP-A- 2016 222 839
- JP-A- 2017 014 395
- JP-A- 2018 127 638
- US-A1- 2017 306 194

## Description

### BACKGROUND OF THE INVENTION

### Field of the Invention

The present invention relates to a thermoplastic resin composition which has excellent thermal decomposition resistance during molding processing, a molded material containing the resin composition, and a molded body obtained by molding the resin composition.

Priority is claimed on Japanese Patent Application No. 2022-021457, filed February 15, 2022.

### Description of Related Art

Many of the monomers having reactive unsaturated bonds can be reacted with a catalyst which causes chain transfer under appropriate conditions to generate a polymer. Examples of representative general-purpose monomers of such monomers having unsaturated bonds can include vinyl compounds such as styrene, alkylstyrene, and alkoxystyrene. Then, a variety of polymers having different physical properties are synthesized by polymerizing such vinyl compounds alone or copolymerizing these compounds. When these polymers are industrially used, since it is not possible to meet various requirements for materials in a homopolymer using one type of monomer, a method of mixing different polymers is used. However, in a case where polymers of different types are only simply mixed, the polymers are not compatible with each other, and thus a phase-separated form having a relatively large size domain (referred to as macro phase separation) is obtained. In many cases, it is difficult for a mixture of polymers of different types to exhibit characteristics of each polymer together.

As a method for solving the above-described problems, a method of using a block copolymer in which two or more types of polymer segments are chemically bonded is known. As described above, in the mixture of the different types of polymers, phase separation occurs because of low compatibility between the polymers. However, in the block polymer, since the polymer segments are chemically bonded to each other, the phase-separated structure thereof has a nanometer size (referred to as micro phase separation). Therefore, the characteristics of each polymer segment can be exhibited together. Among the block copolymers, (meth)acrylic block copolymers have been attempted to be applied to various applications requiring transparency and weather resistance.

As a method for manufacturing such a (meth)acrylic block copolymer, for example, an atom transfer radical polymerization (ATRP) method is known. However, in the ATRP method, since a metal catalyst is used, a generation step of polymer is complicated, which is a problem in that the cost is increased and the productivity is deteriorated. In addition, as a method of not using a metal catalyst, for example, a reversible addition-fragmentation chain transfer (RAFT) polymerization method has been proposed. However, there are problems such as the residual sulfur atoms deteriorating the weather resistance or the obtained molded body of a polymer being colored.

As a method for solving these problems, a method of manufacturing a macromonomer copolymer which is an acrylic block-graft copolymer by using a cobalt complex having an extremely high chain transfer constant in a trace amount to manufacture an acrylic macromonomer in advance and copolymerizing the acrylic macromonomer with another acrylic monomer is known (for example, see Patent Document 1). Here, the macromonomer is a polymer having a functional group capable of a polymerization reaction, and is also referred to as a macromer.

The acrylic macromonomer used in the method of Patent Document 1 has low thermal decomposition resistance (properties of being stable to heat and difficult to be decomposed) because the depolymerization is caused at a relatively low temperature, and is not suitable for thermal molding. Thus, since the thermal decomposition resistance is lowered because of the influence of the unreacted macromonomer included in the macromonomer copolymer, the improvement of the thermal decomposition resistance is a demand. Therefore, in Patent Document 2, a method of improving the thermal decomposition resistance of a macromonomer copolymer by using a nonmetallic chain transfer agent when copolymerizing an acrylic macromonomer with a comonomer has been studied (Patent Document 2). In addition, in Patent Document 3, a method of reducing unreacted macromonomers included in a macromonomer copolymer to improve the thermal decomposition resistance (see Patent Document 3).

### Citation List

### Patent Documents

Patent Document 1: Published Japanese Translation No. 2000-514845 of the PCT International Publication
Patent Document 2: PCT International Publication No. WO2015/056668
Patent Document 3: PCT International Publication No. WO2017/199562

### SUMMARY OF THE INVENTION

### Problem to be Solved by the Invention

In Patent Documents 2 and 3, the unreacted macromonomer can be reduced, but it is difficult to obtain a macromonomer copolymer not containing the unreacted macromonomer, and the improvement of the thermal decomposition resistance of the resin composition containing an acrylic macromonomer is still a problem.

The present invention provides a thermoplastic resin composition having favorable thermal decomposition resistance, a molded material, and a molded body obtained by molding the resin composition.

### Means for Solving Problems

The present invention has the following aspects.
[1] A thermoplastic resin composition comprising a compound (F) which is at least one selected from the group consisting of a macromonomer (A) represented by Formula (1) and a copolymer (C) containing a structural unit derived from the macromonomer (A) represented by Formula (1), and a compound (G) represented by Formula (2). 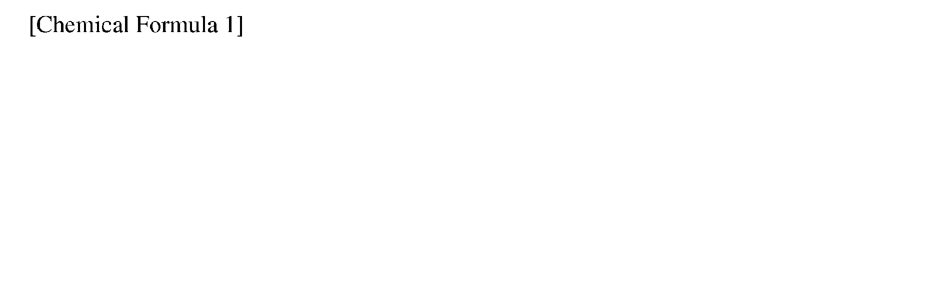 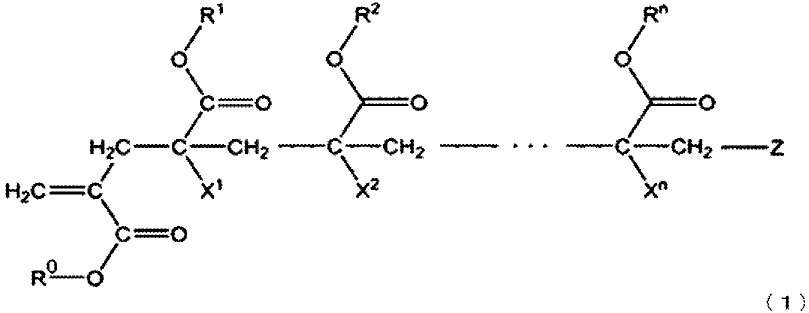
   (In Formula (1), R⁰ to Rⁿ each independently represent a hydrogen atom, an alkyl group, a cycloalkyl group, an aryl group, or a heterocyclic group, X¹ to Xⁿ each independently represent a hydrogen atom or a methyl group, Z represents a terminal group, and n represents a natural number of 1 to 10,000.) 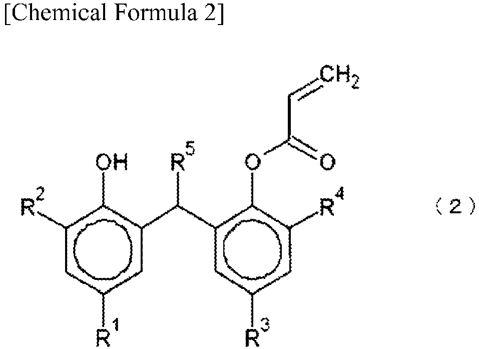
   (In Formula (2), R¹ to R⁴ each independently represent an alkyl group having 1 to 5 carbon atoms, and R⁵ represents an alkyl group having 1 to 5 carbon atoms, or a hydrogen atom.)
[2] The thermoplastic resin composition according to [1], wherein the thermoplastic resin composition contains the copolymer (C), and the copolymer (C) has a chemical structure (E) represented by Formula (3). 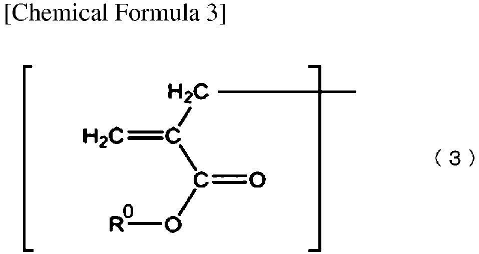 (In Formula (3), R⁰ represents a hydrogen atom, an alkyl group, a cycloalkyl group, an aryl group, or a heterocyclic group.)
[3] The thermoplastic resin composition according to [1] or [2], wherein the compound (F) has a chemical structure (E) represented by Formula (3), and in a case where the molar ratio of the chemical structure (E) and the compound (G) is represented by the chemical structure (E):the compound (G) = 1:X, X is 0.01 or more and 100 or less. 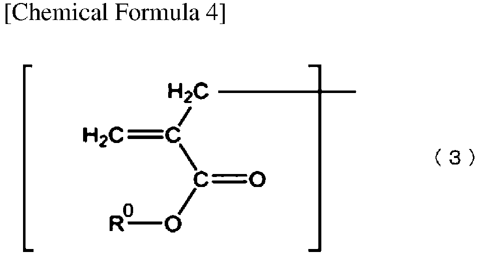 (In Formula (3), R⁰ represents a hydrogen atom, an alkyl group, a cycloalkyl group, an aryl group, or a heterocyclic group.)
[4] The thermoplastic resin composition according to [1] or [2], wherein the compound (F) has a chemical structure (E) represented by Formula (3), and in a case where the molar ratio of the chemical structure (E) and the compound (G) is represented by the chemical structure (E):the compound (G) = 1:X, X is 0.05 or more and 30 or less. 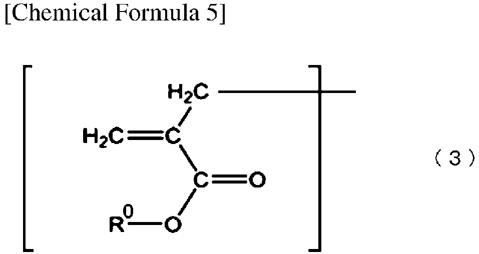 (In Formula (3), R⁰ represents a hydrogen atom, an alkyl group, a cycloalkyl group, an aryl group, or a heterocyclic group.)
[5] The thermoplastic resin composition according to [1] or [2], wherein the compound (F) has a chemical structure (E) represented by Formula (3), and in a case where the molar ratio of the chemical structure (E) and the compound (G) is represented by the chemical structure (E):the compound (G) = 1:X, X is 0.2 or more and 10 or less. 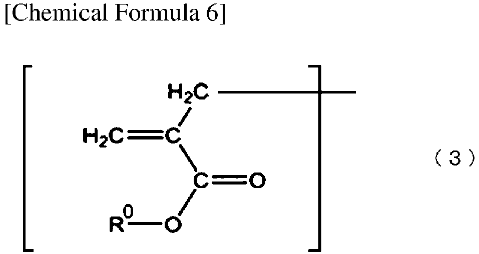 (In Formula (3), R⁰ represents a hydrogen atom, an alkyl group, a cycloalkyl group, an aryl group, or a heterocyclic group.)
[6] The thermoplastic resin composition according to any one of [1] to [5], further comprising a polymer (M) different from the compound (F).
[7] The thermoplastic resin composition according to [6], wherein the polymer (M) is at least one selected from the group consisting of polymethyl methacrylate, polycarbonate, polyvinyl chloride, polyolefin, polyurethane, and polyester.
[8] The thermoplastic resin composition according to [6] or [7], wherein a content of the polymer (M) is 10% to 95% by mass with respect to a total amount of the thermoplastic resin composition.
[9] A thermoplastic resin composition for injection molding or extrusion molding of the thermoplastic resin composition according to any one of [1] to [8].
[10] Use for injection molding or extrusion molding of the thermoplastic resin composition according to any one of [1] to [9].
[11] A molded material comprising the thermoplastic resin composition according to any one of [1] to [9].
[12] A molded body obtained by molding the molded material according to [11].
[13] A vehicle member obtained by molding the molded material according to [11].
[14] An electrical and electronic member obtained by molding the molded material according to [11].
[15] An optical member obtained by molding the molded material according to [11].
[16] A medical member obtained by molding the molded material according to [11].
[17] A food packaging obtained by molding the molded material according to [11].
[18] A method for manufacturing a molded body comprising molding the molded material described in [11] to obtain a molded body.
[19] The method for manufacturing the molded body according to [18], wherein the molding is injection molding or extrusion molding.
[20] The thermoplastic resin composition according to any one of [1] to [8], wherein a content of the compound (F) is preferably 80% to 99.99% by mass, more preferably 90% to 99.99% by mass, and still more preferably 95% to 99.99% by mass with respect to a total amount of the thermoplastic resin composition.
[21] The thermoplastic resin composition according to any one of [1] to [8] and [20], wherein the compound (F) includes the macromonomer (A), and a content of the macromonomer (A) is preferably 80% to 99.99% by mass, more preferably 90% to 99.99% by mass, and still more preferably 95% to 99.99% by mass with respect to a total amount of the thermoplastic resin composition.
[22] The thermoplastic resin composition according to any one of [1] to [8], [20], and [21], wherein the compound (F) includes the copolymer (C), and a content of the copolymer (C) is preferably 80% to 99.99% by mass, more preferably 90% to 99.99% by mass, and still more preferably 95% to 99.99% by mass with respect to a total amount of the thermoplastic resin composition.
[23] The thermoplastic resin composition according to any one of [1] to [8], and [20] to [22], wherein a content of the compound (G) is preferably 0.01% to 5.0% by mass, more preferably 0.05% to 3.0% by mass, and still more preferably 0.08% to 1.5% by mass with respect to a total amount of the thermoplastic resin composition.
[24] The thermoplastic resin composition according to any one of [1] to [8], and [20] to [23], further comprising an additive (D), wherein the additive (D) is at least one selected from the group consisting of various stabilizers such as an antioxidant, an ultraviolet absorber, and a thermal stabilizer; coloring agents such as an inorganic pigment, an organic pigment, and a dye; conductive imparting agents such as carbon black and ferrite; an inorganic filler; a lubricant; a mold release agent; a plasticizer; an organic peroxide; a neutralizing agent; a crosslinking agent; and a reinforcing agent.
[25] The thermoplastic resin composition according to [24], wherein a content of the additive is preferably 0% to 20% by mass, more preferably 0% to 10% by mass, and still more preferably 0% to 3.0% by mass with respect to a total amount of the thermoplastic resin composition.
[26] The thermoplastic resin composition according to any one of [1] to [8], and [20] to [25], wherein the compound (F) includes the macromonomer (A), the macromonomer (A) contains a structural unit derived from a methacrylate, and the methacrylate is preferably methyl methacrylate, n-butyl methacrylate, lauryl methacrylate, dodecyl methacrylate, stearyl methacrylate, 2-ethylhexyl methacrylate, phenyl methacrylate, benzyl methacrylate, isobornyl methacrylate, glycidyl methacrylate, 2-hydroxyethyl methacrylate, or 4-hydroxybutyl methacrylate, more preferably methyl methacrylate, phenyl methacrylate, benzyl methacrylate, 2-hydroxyethyl methacrylate, or 4-hydroxybutyl methacrylate, and still more preferably methyl methacrylate or phenyl methacrylate.
[27] The thermoplastic resin composition according to [26], wherein a content of the structural unit derived from a methacrylate is preferably 50% to 100% by mass, more preferably 60% to 100% by mass, and still more preferably 70% to 100% by mass with respect to a total amount of the macromonomer (A).
[28] The thermoplastic resin composition according to any one of [1] to [8], and [20] to [27], wherein the compound (F) includes the macromonomer (A), the macromonomer (A) contains a structural unit derived from methyl methacrylate, and a content of the structural unit derived from methyl methacrylate is preferably 50% to 100% by mass, more preferably 60% to 100% by mass, and still more preferably 70% to 100% by mass with respect to a total amount of the macromonomer (A).
[29] The thermoplastic resin composition according to any one of [1] to [8], and [20] to [28], wherein the compound (F) includes the macromonomer (A), the macromonomer (A) contains a structural unit derived from a methacrylate other than methyl methacrylate, and a content of the methacrylate other than methyl methacrylate is preferably 0% to 30% by mass, more preferably 0% to 20% by mass, and still more preferably 0% to 15% by mass with respect to a total amount of the macromonomer (A).
[30] The thermoplastic resin composition according to any one of [1] to [8], and [20] to [29], wherein the compound (F) includes the macromonomer (A), the macromonomer (A) contains a structural unit derived from a acrylate, and the acrylate is preferably methyl acrylate, ethyl acrylate, n-propyl acrylate, i-propyl acrylate, n-butyl acrylate, i-butyl acrylate, or t-butyl acrylate, and more preferably methyl acrylate.
[31] The thermoplastic resin composition according to [30], wherein a content of the structural unit derived from an acrylate is preferably 0% to 20% by mass, more preferably 0% to 10% by mass, and still more preferably 0% to 8% by mass with respect to a total amount of the macromonomer (A).
[32] The thermoplastic resin composition according to any one of [1] to [8], and [20] to [31], wherein the compound (F) includes the macromonomer (A), and a number average molecular weight (Mn) of the macromonomer (A) is preferably 1,000 to 50,000, more preferably 2,000 to 30,000, and still more preferably 3,000 to 25,000.
[33] The thermoplastic resin composition according to any one of [1] to [8], and [20] to [32], wherein the compound (F) includes the macromonomer (A), and a mass average molecular weight (Mw) of the macromonomer (A) is preferably 3,000 to 80,000, more preferably 5,000 to 50,000, and still more preferably 7,000 to 40,000.
[34] The thermoplastic resin composition according to any one of [1] to [8], and [20] to [33], wherein the compound (F) includes the macromonomer (A), the macromonomer (A) has a chemical structure (E) represented by Formula (3), and in a case where a molar ratio of the chemical structure (E) and the compound (G) is represented by the chemical structure (E):the compound (G) = 1:X, X is preferably 0.01 or more and 100 or less, more preferably 0.03 or more and 10 or less, still more preferably 0.05 or more and 1 or less, particularly preferably 0.05 or more and 0.50 or less, and most preferably 0.2 or more and 0.45 or less. 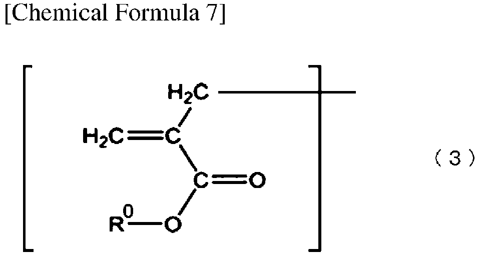 (In Formula (3), R⁰ represents a hydrogen atom, an alkyl group, a cycloalkyl group, an aryl group, or a heterocyclic group.)
[35] The thermoplastic resin composition according to any one of [1] to [8], and [20] to [34], wherein the compound (F) includes the copolymer (C), the copolymer (C) contains a structural unit derived from the macromonomer (A), and a content of the structural unit derived from the macromonomer (A) is preferably 10% to 100% by mass, more preferably 20% to 80% by mass, and still more preferably 30% to 60% by mass with respect to a total amount of the copolymer (C).
[36] The thermoplastic resin composition according to any one of [1] to [8], and [20] to [35], wherein the compound (F) includes the copolymer (C), the copolymer (C) contains a structural unit derived from a comonomer (B) other than the macromonomer (A), and the comonomer (B) is preferably (meth)acrylate or aromatic vinyl, more preferably acrylate or aromatic vinyl, and still more preferably n-butyl acrylate, 2-methoxyethyl acrylate, and styrene.
[37] The thermoplastic resin composition according to [36], wherein a content of the structural unit derived from the comonomer (B) is preferably 0% to 90% by mass, more preferably 20% to 80% by mass, and still more preferably 40% to 70% by mass with respect to a total amount of the copolymer (C).
[38] The thermoplastic resin composition according to any one of [35] to [37], wherein the macromonomer (A) contains a structural unit derived from a methacrylate, and the methacrylate is preferably methyl methacrylate, n-butyl methacrylate, lauryl methacrylate, dodecyl methacrylate, stearyl methacrylate, 2-ethylhexyl methacrylate, phenyl methacrylate, benzyl methacrylate, isobornyl methacrylate, glycidyl methacrylate, 2-hydroxyethyl methacrylate, or 4-hydroxybutyl methacrylate, more preferably methyl methacrylate, phenyl methacrylate, benzyl methacrylate, 2-hydroxyethyl methacrylate, or 4-hydroxybutyl methacrylate, and still more preferably methyl methacrylate or phenyl methacrylate.
[39] The thermoplastic resin composition according to [38], wherein a content of the structural unit derived from a methacrylate is preferably 50% to 100% by mass, more preferably 60% to 100% by mass, and still more preferably 70% to 100% by mass with respect to a total amount of the macromonomer (A).
[40] The thermoplastic resin composition according to any one of [35] to [39], wherein the macromonomer (A) contains a structural unit derived from methyl methacrylate, and a content of the structural unit derived from methyl methacrylate is preferably 50% to 100% by mass, more preferably 60% to 100% by mass, and still more preferably 70% to 100% by mass with respect to a total amount of the macromonomer (A).
[41] The thermoplastic resin composition according to any one of [35] to [40], wherein the macromonomer (A) contains a structural unit derived from a methacrylate other than methyl methacrylate, and a content of the methacrylate other than methyl methacrylate is preferably 0% to 30% by mass, more preferably 0% to 20% by mass, and still more preferably 0% to 15% by mass with respect to a total amount of the macromonomer (A).
[42] The thermoplastic resin composition according to any one of [35] to [41], wherein the macromonomer (A) contains a structural unit derived from a acrylate, and the acrylate is preferably methyl acrylate, ethyl acrylate, n-propyl acrylate, i-propyl acrylate, n-butyl acrylate, i-butyl acrylate, or t-butyl acrylate, and more preferably methyl acrylate.
[43] The thermoplastic resin composition according to [42], wherein a content of the structural unit derived from an acrylate is preferably 0% to 20% by mass, more preferably 0% to 10% by mass, and still more preferably 0% to 8% by mass with respect to a total amount of the macromonomer (A).
[44] The thermoplastic resin composition according to any one of [35] to [43], wherein a number average molecular weight (Mn) of the macromonomer (A) is preferably 1,000 to 50,000, more preferably 2,000 to 30,000, and still more preferably 3,000 to 25,000.
[45] The thermoplastic resin composition according to any one of [35] to [44], wherein a mass average molecular weight (Mw) of the macromonomer (A) is preferably 3,000 to 80,000, more preferably 5,000 to 50,000, and still more preferably 7,000 to 40,000.
[46] The thermoplastic resin composition according to any one of [35] to [45], wherein a mass average molecular weight (Mw) of the copolymer (C) is preferably 100,000 to 3,000,000, more preferably 200,000 to 2,500,000, and still more preferably 250,000 to 2,000,000.
[47] The thermoplastic resin composition according to any one of [35] to [46], wherein the copolymer (C) has a chemical structure (E) represented by Formula (3), and in a case where a molar ratio of the chemical structure (E) and the compound (G) is represented by the chemical structure (E):the compound (G) = 1:X, X is preferably 0.01 or more and 100 or less, more preferably 0.05 or more and 30 or less, and still more preferably 0.2 or more and 10 or less. 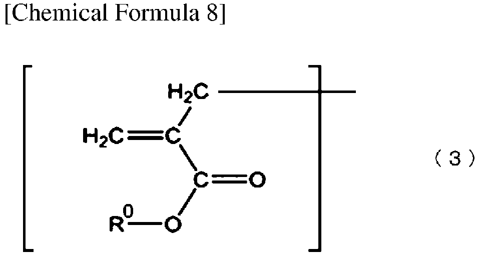 (In Formula (3), R⁰ represents a hydrogen atom, an alkyl group, a cycloalkyl group, an aryl group, or a heterocyclic group.)
[48] The thermoplastic resin composition according to any one of [35] to [47], wherein a molar concentration of the terminal double bond defined by the method described in examples of the copolymer (C) is preferably 0.0010 to 0.0100 mmol/g, more preferably 0.0015 to 0.0080 mmol/g, and still more preferably 0.0020 to 0.0075 mmol/g.
[49] The thermoplastic resin composition according to any one of [1] to [48], wherein, in the compound (G) in Formula (2), R¹ to R⁴ each independently represent a branched alkyl group having 3 to 5 carbon atoms, and R⁵ is preferably a linear alkyl group having 1 to 3 carbon atoms, or a hydrogen atom, more preferably 2-t-butyl-6-(3-t-butyl-2-hydroxy-5-methylbenzyl)-4-methylphenyl acrylate (manufactured by SUMITOMO CHEMICAL COMPANY, LIMITED, trade name: SUMILIZER GM), 2-[1-(2-hydroxy-3,5-di-t-pentylphenyl)ethyl]-4,6-di-t-pentylphenyl acrylate (manufactured by SUMITOMO CHEMICAL COMPANY, LIMITED, trade name: SUMILIZER GS), 2-t-butyl-6-(3'-t-butyl-2'-hydroxy-5'-methyl-methylbenzyl)-4-methylphenyl acrylate, and 2,5-di-t-butyl-6-(3'-5'-di-t-butyl-2'-hydroxymethylbenzyl)-phenyl acrylate, still more preferably 2-t-butyl-6-(3-t-butyl-2-hydroxy-5-methylbenzyl)-4-methylphenyl acrylate and 2-[1-(2-hydroxy-3,5-di-t-pentylphenyl)ethyl]-4,6-di-t-pentylphenyl acrylate, and particularly preferably 2-[1-(2-hydroxy-3,5-di-t-pentylphenyl)ethyl]-4,6-di-t-pentylphenyl acrylate.
[50] The thermoplastic resin composition according to any one of [1] to [49], wherein the terminal group is a group derived from a hydrogen atom and a radical polymerization initiator, and the radical polymerization initiator is preferably benzoyl peroxide, 2,2'-azobisisobutyronitrile, 2,2'-azobis(2-methylbutyronitrile), 2,2'-azobis(2,4-dimethylvaleronitrile), or 2,2'-azobis(2,4-dimethyl-4-methoxyvaleronitrile).
[51] A molded material comprising the thermoplastic resin composition according to any one of [1] to [50].
[52] A molded body obtained by molding the molded material according to [51].
[53] A vehicle member obtained by molding the molded material according to [51].
[54] An electrical and electronic member obtained by molding the molded material according to [51].
[55] An optical member obtained by molding the molded material according to [51].
[56] A medical member obtained by molding the molded material according to [51].
[57] A food packaging obtained by molding the molded material according to [51].
[58] A method for manufacturing a molded body comprising molding the molded material described in [51] to obtain a molded body.
[59] The method for manufacturing the molded body according to [52], wherein the molding is injection molding or extrusion molding.

### Effects of the Invention

According to the present invention, a thermoplastic resin composition having favorable thermal decomposition resistance, a molded material, and a molded body obtained by molding the molded material, can be obtained.

### BRIEF DESCRIPTION OF THE DRAWINGS

FIG. 1 is a schematic cross-sectional view showing an example of a lamp using a lamp cover as a vehicle member formed of the thermoplastic resin composition according to the present invention.
FIG. 2 is a schematic cross-sectional view showing an example of a touch panel as an electrical and electronic member formed of the thermoplastic resin composition according to the present invention.
FIG. 3 is a schematic cross-sectional view showing an example of a light guide plate for image display as an optical member formed of the thermoplastic resin composition according to the present invention.
FIG. 4 is a schematic cross-sectional view showing an example of a tube as a medical member formed of the thermoplastic resin composition according to the present invention.
FIG. 5 is a plan view showing an example of a double bag packaging body as a food packaging formed of the thermoplastic resin composition according to the present invention.

### DETAILED DESCRIPTION OF THE INVENTION

Hereinafter, embodiments for carrying out the present invention (hereinafter, referred to as "present embodiment") will be described in detail, but the present invention is not limited to the following description.

Hereinafter, the monomer component before polymerization is referred to as "~ monomer" and may be abbreviated as "monomer". In addition, the constitutional unit (structural unit) derived from the monomer, which constitutes the polymer, is also referred to as "~ monomer unit". In addition, (meth)acrylate represents methacrylate or acrylate.

The thermoplastic resin composition according to the present invention contains a macromonomer (A) represented by Formula (1) and/or a copolymer (C) containing a structural unit derived from Formula (1) (hereinafter, referred to as "compound (F)"), and a compound (G). In addition, the thermoplastic resin composition is a composition containing at least one thermoplastic resin. That is, the thermoplastic resin composition according to the present embodiment contains at least the compound (F) and the compound (G), and may further contain a thermoplastic resin (X) different from the compound (F) as an optional component. In addition, when the thermoplastic resin composition does not contain the thermoplastic resin (X), the compound (F) is a thermoplastic resin, or when the thermoplastic resin composition contains the thermoplastic resin (X), the compound (F) may be a compound exhibiting thermoplasticity or may be a compound not exhibiting thermoplasticity. The thermoplastic resin composition may contain a copolymer of a macromonomer (A) and a comonomer (B) as the copolymer (C) containing the structural unit derived from Formula (1). The thermoplastic resin composition can be used as a molded material, and a molded body can be manufactured.

### [Compound (F)]

The thermoplastic resin composition according to the embodiment of the present invention contains a compound (F) which is a macromonomer (A) represented by Formula (1) and/or a copolymer (C) containing the structural unit derived from Formula (1). 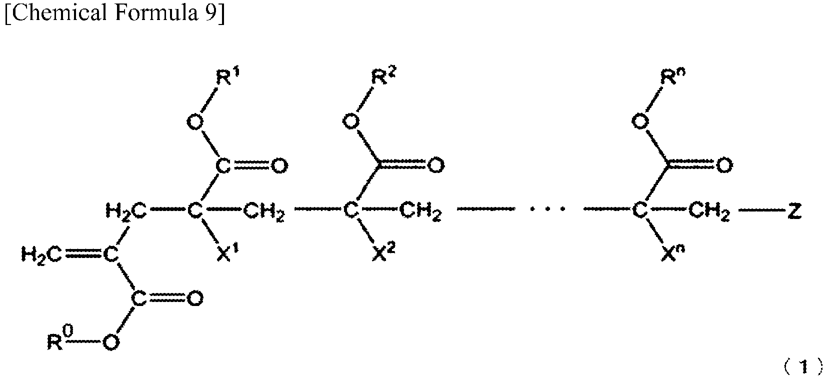 (In Formula (1), R⁰ to Rⁿ each independently represent a hydrogen atom, an alkyl group, a cycloalkyl group, an aryl group, or a heterocyclic group, X¹ to Xⁿ each independently represent a hydrogen atom or a methyl group, Z represents a terminal group, and n represents a natural number of 1 to 10,000.)

### [Macromonomer (A)]

The macromonomer (A) has, at one terminal of a poly(meth)acrylate segment, a group having a radically polymerizable unsaturated double bond. The macromonomer (A) is a compound represented by Formula (1). 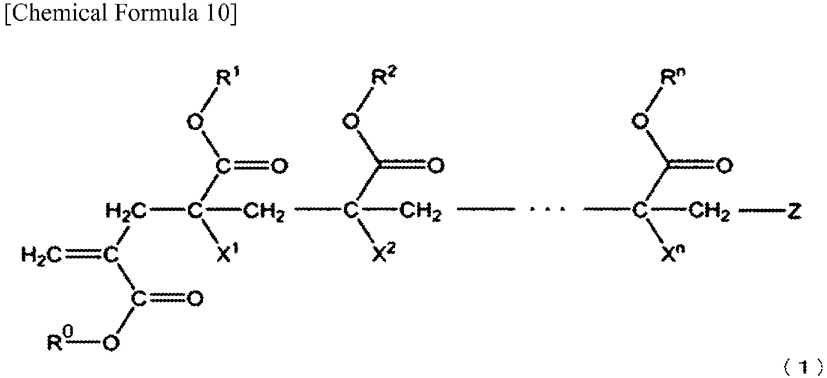 (In Formula (1), R⁰ to Rⁿ each independently represent a hydrogen atom, an alkyl group, a cycloalkyl group, an aryl group, or a heterocyclic group, X¹ to Xⁿ each independently represent a hydrogen atom or a methyl group, Z represents a terminal group, and n represents a natural number of 1 to 10,000.)

### [R⁰ to Rⁿ]

In Formula (1), R⁰ to Rⁿ each independently represent a hydrogen atom, an alkyl group, a cycloalkyl group, an aryl group, or a heterocyclic group. The alkyl group, cycloalkyl group, aryl group, or heterocyclic group may have a substituent.

Examples of the alkyl group of R⁰ to Rⁿ include a branched or linear alkyl group having 1 to 20 carbon atoms. Specific examples thereof include a methyl group, an ethyl group, an n-propyl group, an i-propyl group, an n-butyl group, an i-butyl group, a t-butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an icosyl group. Among these, from the viewpoint of the availability, a methyl group, an ethyl group, an n-propyl group, an i-propyl group, an n-butyl group, a t-butyl group, a pentyl group, a hexyl group, a heptyl group, and an octyl group are preferable, a methyl group, an ethyl group, an n-propyl group, an i-propyl group, an n-butyl group, and a t-butyl group are more preferable, and a methyl group is particularly preferable.

Examples of the cycloalkyl group of R⁰ to Rⁿ include a cycloalkyl group having 3 to 20 carbon atoms. Specific examples thereof include a cyclopropyl group, a cyclobutyl group, a cyclopentyl group, a cyclohexyl group, a cycloheptyl group, a cyclooctyl group, a t-butylcyclohexyl group, an isobornyl group, and an adamantyl group. From the viewpoint of availability, a cyclopropyl group, a cyclobutyl group, and an adamantyl group are preferable.

Examples of the aryl group of R⁰ to Rⁿ include an aryl group having 6 to 18 carbon atoms. Specific examples thereof include a phenyl group, a benzyl group, and a naphthyl group.

Examples of the heterocyclic group of R⁰ to Rⁿ include a heterocyclic group having 5 to 18 carbon atoms. Specific examples thereof include a γ-lactone group, an ε-caprolactone group, and a morpholine group. Examples of the heteroatom in a heterocyclic ring include an oxygen atom, a nitrogen atom, and a sulfur atom.

Examples of the substituents capable of being introduced to R⁰ to Rⁿ each independently include a group or an atom selected from the group consisting of an alkyl group, an aryl group, a carboxy group, an alkoxycarbonyl group (-COOR'), a carbamoyl group (-CONR'R"), a cyano group, a hydroxy group, an amino group, an amide group (-NR'R"), a halogen atom, an allyl group, an epoxy group, an alkoxy group (-OR'), and a group exhibiting hydrophilicity or ionicity. Examples of R' and R" each independently include the same group as that for R (excluding a heterocyclic group).

Examples of the alkoxycarbonyl group as the substituent of R⁰ to Rⁿ include a methoxycarbonyl group.

Examples of the carbamoyl group as a substituent of R⁰ to Rⁿ include an N-methylcarbamoyl group and an N,N-dimethylcarbamoyl group.
Examples of the amide group as the substituent of R⁰ to Rⁿ include a dimethylamido group.

Examples of the halogen atom as a substituent of R⁰ to Rⁿ include a fluorine atom, a chlorine atom, a bromine atom, and an iodine atom.
Examples of the alkoxy group as a substituent of R⁰ to Rⁿ include an alkoxy group having 1 to 12 carbon atoms. Specific examples thereof include a methoxy group.

Examples of the group exhibiting hydrophilicity or ionicity as a substituent of R⁰ to Rⁿ include cationic substituents such as an alkali salt of a carboxy group, an alkali salt of a sulfoxyl group, a poly(alkylene oxide) group such as polyethylene oxide group or a polypropylene oxide group, and a quaternary ammonium base.

R⁰ to Rⁿ are each preferably at least one selected from an alkyl group, a cycloalkyl group, an aryl group, or a hydroxy group.

As the alkyl group, a methyl group, an ethyl group, an n-propyl group, or an i-propyl group is preferable, and a methyl group is more preferable from the viewpoint of availability.

### [X¹ to Xⁿ]

In Formula (1), X¹ to Xⁿ are each a hydrogen atom or a methyl group, and a methyl group is preferable. Furthermore, from the viewpoint of ease of synthesizing the macromonomer (A), it is preferable that half or more of X¹ to Xⁿ are methyl groups.

### [Z]

In Formula (1), Z represents a terminal group of the macromonomer (A). Examples of the terminal group of the macromonomer (A) include a hydrogen atom and a group derived from a radical polymerization initiator, similarly to the terminal group of a polymer obtained by known radical polymerization.

### [Chemical structure (E) represented by Formula (3)]

A left side portion of the macromonomer (A) or the copolymer (C), that is, a left side part of the compound containing the structural unit presented by Formula (1) or derived from Formula (1) may include a chemical structure (E) represented by Formula (3). 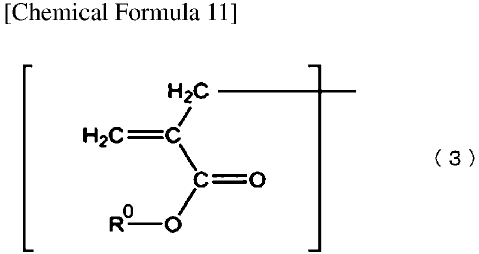 (In Formula (3), R⁰ represents a hydrogen atom, an alkyl group, a cycloalkyl group, an aryl group, or a heterocyclic group.)

### [R⁰]

In Formula (3), R⁰ is a hydrogen atom, an alkyl group, a cycloalkyl group, an aryl group, or a heterocyclic group. The alkyl group, cycloalkyl group, aryl group, or heterocyclic group may have a substituent.

Examples of the alkyl group of R⁰ include a branched or linear alkyl group having 1 to 20 carbon atoms. Specific examples thereof include a methyl group, an ethyl group, an n-propyl group, an i-propyl group, an n-butyl group, an i-butyl group, a t-butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an icosyl group. Among these, from the viewpoint of the availability, a methyl group, an ethyl group, an n-propyl group, an i-propyl group, an n-butyl group, a t-butyl group, a pentyl group, a hexyl group, a heptyl group, and an octyl group are preferable, a methyl group, an ethyl group, an n-propyl group, an i-propyl group, an n-butyl group, and a t-butyl group are more preferable, and a methyl group is particularly preferable.

Examples of the cycloalkyl group of R⁰ include a cycloalkyl group having 3 to 20 carbon atoms. Specific examples thereof include a cyclopropyl group, a cyclobutyl group, a cyclopentyl group, a cyclohexyl group, a cycloheptyl group, a cyclooctyl group, a t-butylcyclohexyl group, an isobornyl group, and an adamantyl group. From the ease of availability, a cyclopropyl group, a cyclobutyl group, a cyclohexyl group, or an adamantyl group is preferable.

Examples of the aryl group of R⁰ include an aryl group having 6 to 18 carbon atoms. Specific examples thereof include a phenyl group, a benzyl group, and a naphthyl group.

Examples of the heterocyclic group of R⁰ include a heterocyclic group having 5 to 18 carbon atoms. Specific examples thereof include a γ-lactone group, an ε-caprolactone group, and a morpholine group. Examples of the heteroatom in a heterocyclic ring include an oxygen atom, a nitrogen atom, and a sulfur atom.

Examples of the substituents capable of being introduced to R⁰ each independently include a group or an atom selected from the group consisting of an alkyl group, an aryl group, a carboxy group, an alkoxycarbonyl group (-COOR'), a carbamoyl group (-CONR'R"), a cyano group, a hydroxy group, an amino group, an amide group (-NR'R"), a halogen atom, an allyl group, an epoxy group, an alkoxy group (-OR'), and a group exhibiting hydrophilicity or ionicity. Examples of R' and R" each independently include the same group as that for R (excluding a heterocyclic group).

Examples of the alkoxycarbonyl group as a substituent of R⁰ include a methoxycarbonyl group.

Examples of the carbamoyl group as a substituent of R⁰ include an N-methylcarbamoyl group and an N,N-dimethylcarbamoyl group.

Examples of the amide group as a substituent of R⁰ include a dimethylamido group. Examples of the halogen atom as the substituent of R⁰ include a fluorine atom, a chlorine atom, a bromine atom, and an iodine atom.

Examples of the alkoxy group as a substituent of R⁰ include an alkoxy group having 1 to 12 carbon atoms. Specific examples thereof include a methoxy group.

Examples of the group exhibiting hydrophilicity or ionicity as a substituent of R⁰ include cationic substituents such as an alkali salt of a carboxy group, an alkali salt of a sulfoxyl group, a poly(alkylene oxide) group such as polyethylene oxide group or a polypropylene oxide group, and a quaternary ammonium base.

R⁰ is preferably at least one selected from an alkyl group, a cycloalkyl group, an aryl group, or a hydroxy group.

As the alkyl group, a methyl group, an ethyl group, an n-propyl group, or an i-propyl group is preferable, and a methyl group is more preferable from the viewpoint of availability.

### [Raw material monomer of macromonomer (A)]

Examples of the raw material monomer for obtaining the macromonomer (A) include (meth)acrylates such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, n-lauryl (meth)acrylate, n-stearyl (meth)acrylate, cyclohexyl (meth)acrylate, phenyl (meth)acrylate, benzyl (meth)acrylate, isobornyl (meth)acrylate, 2-methoxyethyl (meth)acrylate, 2-ethoxyethyl (meth)acrylate, and phenoxyethyl (meth)acrylate; hydroxyl group-containing (meth)acrylates such as 2-hydroxyethyl (meth)acrylate, 2-hydroxypropyl (meth)acrylate, 4-hydroxybutyl (meth)acrylate, and glycerol (meth)acrylate; carboxy group-containing vinyl-based monomers such as (meth)acrylic acid, 2-(meth)acryloyloxyethylhexahydrophthalic acid, 2-(meth)acryloyloxypropylhexahydrophthalic acid, 2-(meth)acryloyloxyethylphthalic acid, 2-(meth)acryloyloxypropylphthalic acid, 2-(meth)acryloyloxyethylmaleic acid, 2-(meth)acryloyloxypropylmaleic acid, 2-(meth)acryloyloxyethylsuccinic acid, 2-(meth)acryloyloxypropylsuccinic acid, crotonic acid, fumaric acid, maleic acid, itaconic acid, monomethyl maleic acid, and monomethyl itaconic acid; acid anhydride group-containing vinyl-based monomers such as maleic anhydride and itaconic anhydride; epoxy group-containing vinyl-based monomers such as glycidyl (meth)acrylate, glycidyl α-ethyl acrylate, and 3,4-epoxybutyl (meth)acrylate; amino group-containing (meth)acrylate-based vinyl-based monomers such as dimethylaminoethyl (meth)acrylate and diethylaminoethyl (meth)acrylate; vinyl-based monomers containing an amide group, such as (meth)acrylamide, N-t-butyl (meth)acrylamide, N-methylol (meth)acrylamide, N-methoxymethyl (meth)acrylamide, N-butoxymethyl (meth)acrylamide, diacetone acrylamide, maleic acid amide, and maleimide; vinyl-based monomers such as styrene, α-methylstyrene, vinyltoluene, (meth)acrylonitrile, vinyl chloride, vinyl acetate, and vinyl propionate; polyfunctional vinyl-based monomers such as divinylbenzene, ethylene glycol di(meth)acrylate, 1,3-butylene glycol di(meth)acrylate, 1,6-hexanediol di(meth)acrylate, triethylene glycol di(meth)acrylate, tetraethylene glycol di(meth)acrylate, tripropylene glycol di(meth)acrylate, trimethylolpropane tri(meth)acrylate, allyl (meth)acrylate, and N,N'-methylenebis(meth)acrylamide, and the like. Among these, one or more can be appropriately selected and used.

Among these, from the viewpoint of ease of availability of the monomer, methacrylate is preferable.

The methacrylate is preferably methyl methacrylate, n-butyl methacrylate, lauryl methacrylate, dodecyl methacrylate, stearyl methacrylate, 2-ethylhexyl methacrylate, phenyl methacrylate, benzyl methacrylate, isobornyl methacrylate, glycidyl methacrylate, 2-hydroxyethyl methacrylate, or 4-hydroxybutyl methacrylate, more preferably methyl methacrylate, phenyl methacrylate, benzyl methacrylate, 2-hydroxyethyl methacrylate, or 4-hydroxybutyl methacrylate, and still more preferably methyl methacrylate or phenyl methacrylate.

In addition, from the viewpoints of ease of availability of the macromonomer (A), and the like, it is preferable to use methyl methacrylate. A proportion of methyl methacrylate with respect to the total 100% by mass of the monomer composition for obtaining the macromonomer (A) is preferably 50% by mass or more, more preferably 60% by mass or more, and particularly preferably 70% by mass or more.

In addition, as the raw material monomer for obtaining the macromonomer (A), from the viewpoint of thermal decomposition resistance of the macromonomer (A) and the macromonomer copolymer obtained using the macromonomer (A) as a raw material, the above-described monomer composition containing a methacrylate or acrylate is preferable.

Examples of the acrylate include methyl acrylate, ethyl acrylate, n-propyl acrylate, i-propyl acrylate, n-butyl acrylate, i-butyl acrylate, and t-butyl acrylate. Among these, from the viewpoint of ease of availability, methyl acrylate is preferable.

From the viewpoint of heat resistance of the macromonomer (A), the macromonomer copolymer obtained using the macromonomer (A) as a raw material, the resin composition containing these, and the molded body therefrom, the content of the methacrylate in the monomer composition for obtaining the macromonomer (A) is preferably 80% by mass or more, more preferably 82% by mass or more, and still more preferably 84% by mass or more. In addition, from the viewpoint of thermal decomposition resistance of the macromonomer (A), the macromonomer copolymer obtained using the macromonomer (A) as a raw material, the resin composition containing these, and the molded body therefrom, the content of the methacrylate in the monomer composition for obtaining the macromonomer (A) is preferably 100% by mass or less, more preferably 99% by mass or less, and still more preferably 98% by mass or less. The content of the acrylate in the monomer composition for obtaining the macromonomer (A) is preferably 0% by mass or more, more preferably 1% by mass or more, and still more preferably 2% by mass or more. In a case where the content of the acrylate is 1% by mass or more, the thermal decomposition resistance of the macromonomer (A), the macromonomer copolymer obtained using the macromonomer (A) as a raw material, the resin composition containing these, and the molded body therefrom are improved. The content of acrylate in the monomer composition for obtaining the macromonomer (A) is preferably 20% or less, more preferably 18% by mass or less, and still more preferably 16% by mass or less. In a case where the content of the acrylate is 20% by mass or less, heat resistance of the resin composition containing the acrylate and molded body therefrom is improved.

The content of the structural unit contained in the polymer in the present specification can be calculated from the charged amount of the monomer in the polymerization.

### [Method for manufacturing macromonomer (A)]

The macromonomer (A) can be manufactured by a known method. Examples of a method for manufacturing the macromonomer include a method of manufacturing the macromonomer using a cobalt chain transfer agent (United States Patent No. 4680352), a method of using an α-substituted unsaturated compound such as α-bromomethylstyrene as a chain transfer agent (PCT International Publication No. WO88/04304), a method by thermal decomposition (Published Japanese Translation No. H11-240854), and the like.

Among these, as the method for manufacturing the macromonomer (A), a method of using a cobalt chain transfer agent is preferable from the viewpoint of using a catalyst in which the number of manufacture steps is small and a chain transfer constant is large.

Examples of the method for producing the macromonomer (A) using a cobalt chain transfer agent include a bulk polymerization method, a solution polymerization method, and an aqueous dispersion polymerization method such as a suspension polymerization method or an emulsion polymerization method. Among these, the aqueous dispersion polymerization method is preferable from the viewpoint of simplifying a recovery step for the macromonomer (A). In addition, the macromonomer copolymer can be obtained by the polymerization reaction by additionally adding the comonomer (B) and a thermal polymerization initiator without recovering the macromonomer (A).

As the cobalt chain transfer agent used in the present invention, a cobalt chain transfer agent represented by Formula (4) can be used, and for example, those described in Japanese Patent No. 3587530, Japanese Unexamined Patent Application, First Publication No. H6-23209, Japanese Unexamined Patent Application, First Publication No. H7-35411, United States Patent No. 45269945, United States Patent No. 4694054, United States Patent No. 4834326, United States Patent No. 4886861, United States Patent No. 5324879, PCT International Publication No. WO95/17435, and Published Japanese Translation No. H9-510499 can be used. 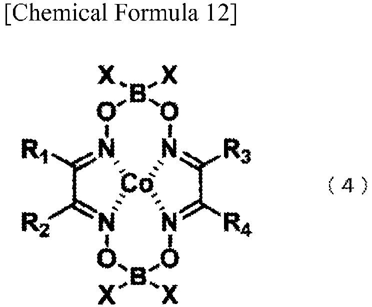 [In the formula, R₁ to R₄ each independently represent an alkyl group, a cycloalkyl group, or an aryl group, and X's each independently represent an F atom, a Cl atom, a Br atom, an OH group, an alkoxy group, an aryloxy group, an alkyl group, or an aryl group.]

Specific examples of the cobalt chain transfer agent include bis(borondifluorodimethyldioxyiminocyclohexane) cobalt (II), bis(borondifluorodimethylglyoxymate) cobalt (II), bis(borondifluorodiphenylglyoxymate) cobalt (II), a cobalt (II) complex of a vicinaliminohydroxyimino compound, a cobalt (II) complex of a tetraazatetraalkylcyclotetradecatetraene, an N,N'-bis(salicylidene)ethylenediamino cobalt (II) complex, a cobalt (II) complex of a dialkyldiazadioxodialkyldodecadiene, and a cobalt (II) porphyrin complex. Among them, bis(borondifluorodiphenylglyoxymate) cobalt (II) (R₁ to R₄: phenyl group, X: F atom), which is stably present in an aqueous medium and has a high chain transfer effect, is preferable. One or more of these can be appropriately selected and used.

The using amount of the cobalt chain transfer agent is preferably 20 ppm or more and 350 ppm or less with respect to 100 parts by mass of the monomer for obtaining the macromonomer (A). In a case where the using amount of the cobalt chain transfer agent is 20 ppm or more, the effect of reducing the molecular weight as the target is likely to be obtained, and in a case where the using amount is 350 ppm or less, the coloration of the obtained macromonomer (A) is likely to be prevented.

Examples of the solvent used when obtaining the macromonomer (A) by the solution polymerization method include hydrocarbons such as toluene; ethers such as diethyl ether and tetrahydrofuran; halogenated hydrocarbons such as dichloromethane and chloroform; ketones such as acetone; alcohols such as methanol; nitriles such as acetonitrile; vinyl esters such as ethyl acetate; carbonates such as ethylene carbonate; and supercritical carbon dioxide. One type of these can be used alone, or two or more types thereof can be used in combination.

### [Comonomer (B)]

The comonomer (B) can be used when manufacturing a copolymer (C) which will be described later. The comonomer (B) is not particularly limited as long as the comonomer (B) can be copolymerized with the macromonomer (A), and various polymerizable monomers can be used as necessary. As the comonomer (B), a monomer having a double bond and having radical polymerizability can be used alone or in combination of two or more types thereof. In addition, when the comonomer (B) includes a plurality of types of monomers, it is also possible to use, as a part of the comonomer (B), a monomer having a low copolymerizability with the macromonomer (A).

Specific examples thereof include the same monomers as those for obtaining the macromonomer (A). The comonomer (B) is preferably (meth)acrylate or an aromatic vinyl from the viewpoint of good copolymerizability with the macromonomer (A). Examples of the (meth)acrylate include methyl (meth)acrylate, ethyl (meth)acrylate, n-propyl (meth)acrylate, n-butyl (meth)acrylate, lauryl (meth)acrylate, stearyl (meth)acrylate, 2-ethylhexyl (meth)acrylate, glycidyl (meth)acrylate, 2-hydroxyethyl (meth)acrylate, 4-hydroxybutyl (meth)acrylate, phenyl (meth)acrylate, benzyl (meth)acrylate, methoxymethyl (meth)acrylate, methoxyethyl (meth)acrylate, methoxypropyl (meth)acrylate, methoxybutyl (meth)acrylate, ethoxymethyl (meth)acrylate, ethoxyethyl (meth)acrylate, ethoxypropyl (meth)acrylate, ethoxybutyl (meth)acrylate, propoxymethyl (meth)acrylate, propoxyethyl (meth)acrylate, propoxypropyl (meth)acrylate, propoxybutyl (meth)acrylate, butoxymethyl (meth)acrylate, butoxyethyl (meth)acrylate, butoxypropyl (meth)acrylate, butoxybutyl (meth)acrylate, "BLEMMER PME-100" (methoxypolyethylene glycol methacrylate (ethylene glycol chain is 2) manufactured by NOF CORPORATION, product name), and "BLEMMER PME-200" (methoxypolyethylene glycol methacrylate (ethylene glycol chain is 4) manufactured by NOF CORPORATION, product name). Examples of the aromatic vinyl include styrene, α-methylstyrene, o-methylstyrene, p-methylstyrene, o-ethylstyrene, p-ethylstyrene, p-t-butylstyrene, vinyl ethyl benzene, vinyltoluene, vinylxylene, vinylnaphthalene, diphenylethylene, and divinylbenzene. One type of the comonomer (B) can be used alone or in combination of two or more types thereof.

Among the above-described monomers, acrylate is preferably selected from the viewpoint of good copolymerizability with the macromonomer (A). The acrylate is, for example, preferably 2-ethylhexyl acrylate, 4-hydroxybutyl acrylate, n-butyl acrylate, n-propyl acrylate, ethyl acrylate, 2-hydroxyethyl acrylate, methoxymethyl acrylate, methoxyethyl acrylate, methoxypropyl acrylate, methoxybutyl acrylate, methoxypolyethylene glycol acrylate, methoxymethyl methacrylate, methoxyethyl methacrylate, methoxypropyl methacrylate, methoxybutyl methacrylate, methoxypolyethylene glycol methacrylate, or methyl acrylate.

In addition, when imparting a function such as flexibility, toughness, or improvement of impact resistance to the polymer of the comonomer (B), a comonomer (B) having a low glass transition temperature (Tg) of the homopolymer may be selected. The glass transition temperature (Tg) of the homopolymer is described in Polymer Handbook [Polymer HandBook, J. Brandrup, Interscience, 1989] or the like. Examples of the comonomer (B) having a low glass transition temperature of the homopolymer include 2-ethylhexyl acrylate, n-butyl acrylate, n-propyl acrylate, lauryl acrylate, methoxymethyl acrylate, methoxyethyl acrylate, methoxypropyl acrylate, methoxybutyl acrylate, methoxypolyethylene glycol acrylate, methoxymethyl methacrylate, methoxyethyl methacrylate, methoxypropyl methacrylate, methoxybutyl methacrylate, methoxypolyethylene glycol methacrylate, methyl acrylate, and the like.

In addition, when imparting a function of inhibiting the adhesion of a protein to the polymer of the comonomer (B), the comonomer (B) is preferably methoxymethyl acrylate, methoxyethyl acrylate, methoxypropyl acrylate, methoxybutyl acrylate, methoxypolyethylene glycol acrylate, methoxymethyl methacrylate, methoxyethyl methacrylate, methoxypropyl methacrylate, methoxybutyl methacrylate, or methoxypolyethylene glycol methacrylate, and more preferably methoxyethyl acrylate, methoxypropyl acrylate, methoxypolyethylene glycol acrylate, or methoxypolyethylene glycol methacrylate, and still more preferably methoxyethyl acrylate or methoxyethyl methacrylate.

In addition, as the comonomer (B), for the purpose of adjusting the refractive index of the homopolymer of the comonomer (B) to the polymer (M) which will be described later or the macromonomer (A), an aromatic vinyl as a high refractive index component can be used.

Examples of the aromatic vinyl include styrene, α-methylstyrene, o-methylstyrene, p-methylstyrene, o-ethylstyrene, p-ethylstyrene, p-t-butylstyrene, vinyl ethyl benzene, vinyltoluene, vinylxylene, vinylnaphthalene, diphenylethylene, divinylbenzene, and the like. Among these, styrene is preferable from the viewpoints of practical physical properties and productivity. These can be used alone or in combination of two or more types thereof.

When the acrylate and the aromatic vinyl, which are described above, are used as the comonomer (B), the proportion of the aromatic vinyl with respect to the total 100% by mass of the comonomer (B) is preferably 10% by mass or more, more preferably 15% by mass or more, still more preferably 20% by mass or more, and particularly preferably 26% by mass or more. In a case where the content of the aromatic vinyl is 10% by mass or more, transparency of the thermoplastic resin composition, and the molded material and the molded body obtained therefrom is improved. When the acrylate and the aromatic vinyl, which are described above, are used as the comonomer (B), the proportion of the aromatic vinyl with respect to the total 100% by mass of the comonomer (B) is preferably 50% by mass or less, more preferably 45% by mass or less, and still more preferably 40% by mass or less. In a case where the content of the aromatic vinyl is 50% by mass or less, the weather resistance is improved.

### [Copolymer (C)]

The compound (F) contained in the thermoplastic resin composition according to the embodiment of the present invention may be a copolymer (C). The copolymer (C) is a macromonomer copolymer obtained by copolymerizing the macromonomer (A) and the comonomer (B). The copolymerization reaction mechanism between the macromonomer (A) and the comonomer (B) is described in detail in the report written by Yamada et al. (Prog. Polym. Sci. 31 (2006) pp. 835 to 877) and the like. When the radical polymerization is carried out in the presence of the macromonomer (A) and the comonomer (B), by addition-fragmentation chain transfer, the chemical structure (E) may move to the terminal of a newly generated polymer chain when the chemical structure (E) is present at the terminal of the macromonomer (A). Therefore, a part or all of the copolymer (C) has a chemical structure (E).

### [Method for manufacturing copolymer (C)]

The copolymer (C) is obtained by copolymerizing the macromonomer (A) and the comonomer (B). When carrying out a copolymerization reaction for obtaining the copolymer (C), a radical polymerization initiator and a chain transfer agent which is optionally used are used.

A method for manufacturing the copolymer (C) is not particularly limited, and various methods such as solution polymerization, suspension polymerization, emulsion polymerization, and bulk polymerization can be used. From the viewpoint that the control of polymerization heat generation is easy and the productivity is excellent, a water-based polymerization such as suspension polymerization or emulsion polymerization is preferable, and from the viewpoint that the polymerization and recovery operation are more simple, suspension polymerization is more preferable.

Examples of a method for manufacturing the copolymer (C) by suspension polymerization include the following [I] or [II].
[I] The macromonomer (A) is dissolved in the comonomer (B), and a radical polymerization initiator is added thereto. The macromonomer (A) solution is dispersed in an aqueous solution in which a dispersant is dissolved to obtain a syrup dispersion liquid. The obtained syrup dispersion liquid is subjected to suspension polymerization.
[II] The comonomer (B) is added to an aqueous suspension obtained by synthesizing the macromonomer (A) by suspension polymerization to obtain a dispersion of the comonomer (B) in which the macromonomer (A) is dissolved, as a syrup suspension. Therefore, the obtained syrup suspension is subjected to suspension polymerization.

The copolymer (C) obtained by the method for manufacturing of [I] tends to have excellent optical characteristics. In addition, in the method for manufacturing of [II], since the recovery step of the macromonomer (A) can be omitted, the manufacture step can be shortened.

In any of the methods of [I] and [II], it is preferable to heat the macromonomer (A) when dissolving the macromonomer (A) in the comonomer (B). A heating temperature is preferably 30°C or more and 90°C or less. In a case where the heating temperature is 30°C or more, the solubility of the macromonomer (A) can be improved. The heating temperature is more preferably 35°C or more. In addition, in a case where the heating temperature is 90°C or less, the volatilization of the comonomer (B) can be suppressed. The heating temperature is more preferably 75°C or less.

In the method for manufacturing of [I], the adding time of the radical polymerization initiator to the comonomer (B) is preferably after the macromonomer (A) is dissolved in the comonomer (B).

A temperature at which the radical polymerization initiator is added to the macromonomer (A) and/or the comonomer (B) is preferably less than SADT (minimum temperature occurring a self-accelerating decomposition) and preferably lower than a 10-hour half-life temperature of the radical polymerization initiator by 20°C or more. In addition, a temperature at which the polymerization reaction is carried out is preferably equal to or more than a 10-hour half-life temperature of the radical polymerization initiator, and is more preferably higher than the 10-hour half-life temperature by 5°C to 20°C.

Examples of the radical polymerization initiator include an organic peroxide and an azo compound.

Specific examples of the organic peroxide include 2,4-dichlorobenzoyl peroxide, t-butyl peroxypivalate, o-methylbenzoyl peroxide, bis-3,5,5-trimethylhexanoyl peroxide, octanoyl peroxide, t-butylperoxy-2-ethyl hexanoate, cyclohexanone peroxide, benzoyl peroxide, methyl ethyl ketone peroxide, dicumyl peroxide, lauroyl peroxide, diisopropyl benzene hydroperoxide, t-butyl hydroperoxide, and di-t-butyl peroxide.

Specific examples of the azo compound include 2,2'-azobisisobutyronitrile, 2,2'-azobis(2-methylbutyronitrile), 2,2'-azobis(2,4-dimethylvaleronitrile), and 2,2'-azobis(2,4-dimethyl-4-methoxyvaleronitrile).

From the viewpoint of ease of availability, benzoyl peroxide, 2,2'-azobisisobutyronitrile, 2,2'-azobis(2-methylbutyronitrile), 2,2'-azobis(2,4-dimethylvaleronitrile), or 2,2'-azobis(2,4-dimethyl-4-methoxyvaleronitrile) is preferable.

One type of radical polymerization initiator can be used alone or in a combination of two or more kinds thereof.

From the viewpoint of controlling polymerization heat generation, the amount of the radical polymerization initiator to be added is preferably 0.0001 parts by mass or more and 10 parts by mass or less with respect to 100 parts by mass of the total amount of the macromonomer (A) and the comonomer (B).

The chain transfer agent is added as necessary for the purpose of adjusting the molecular weight of the copolymer (C) or the polymerization reaction rate. In addition, the chain transfer agent also has an effect of not leaving the terminal double bond group of the macromonomer (A) as unreacted. Examples of the chain transfer agents include sulfur-containing chain transfer agents such as t-dodecyl mercaptan and n-octyl mercaptan, an α-methyl styrene dimer, carbon tetrachloride, and a terpenoid. However, from the viewpoints of ease of availability and a high chain transfer ability, a sulfur-containing chain transfer agent is preferable.

When using the chain transfer agent, the content thereof is preferably 0.01 parts by mass or more, more preferably 0.03 parts by mass or more, and still more preferably 0.05 parts by mass or more with respect to 100 parts by mass of the monomer mixture. In a case where the content of the chain transfer agent is 0.01 parts by mass or more, the addition effect is sufficiently obtained. The content of the chain transfer agent is preferably 0.5 parts by mass or less, more preferably 0.3 parts by mass or less, and still more preferably 0.2 parts by mass or less with respect to 100 parts by mass of the monomer mixture. In a case where the content of the chain transfer agent is 0.5 parts by mass or less, the obtained copolymer (C) has excellent mechanical strength.

### [Compound (G)]

The thermoplastic resin composition according to the embodiment of the present invention contains a compound (G). The compound (G) is represented by Formula (2). The compound (G) has a phenolic hydroxyl group and a CH₂=CH- group as the functional group. It is presumed that the compound (G) is stabilized by effectively capturing the radicals generated by the depolymerization of the macromonomer (A) contained in the thermoplastic resin composition by the CH₂=CH- group, and quickly moving the hydrogen atom from the phenolic hydroxyl group through intramolecular hydrogen bonding, thereby exhibiting an action of preventing thermal deterioration of the thermoplastic resin composition. Therefore, the thermoplastic resin composition containing the compound (G) is excellent in thermal decomposition resistance during a molding processing.

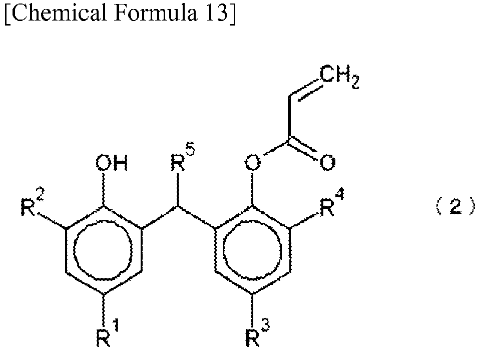

R¹ to R⁴ in Formula (2) each independently represent an alkyl group having 1 to 5 carbon atoms, and R⁵ represents an alkyl group having 1 to 5 carbon atoms, or a hydrogen atom.

Specific examples of the compound (G) include 2-t-butyl-6-(3-t-butyl-2-hydroxy-5-methylbenzyl)-4-methylphenyl acrylate (manufactured by SUMITOMO CHEMICAL COMPANY, LIMITED, trade name: SUMILIZER GM), 2-[1-(2-hydroxy-3,5-di-t-pentylphenyl)ethyl]-4,6-di-t-pentylphenyl acrylate (manufactured by SUMITOMO CHEMICAL COMPANY, LIMITED, trade name: SUMILIZER GS), 2-t-butyl-6-(3'-t-butyl-2'-hydroxy-5'-methyl-methylbenzyl)-4-methylphenyl acrylate, 2,5-dit-butyl-6-(3'-5'-di-t-butyl-2'-hydroxymethylbenzyl)-phenyl acrylate, and the like.

Among these, 2-t-butyl-6-(3-t-butyl-2-hydroxy-5-methylbenzyl)-4-methylphenyl acrylate or 2-[1-(2-hydroxy-3,5-di-t-pentylphenyl)ethyl]-4,6-di-t-pentylphenyl acrylate is preferable, and 2-[1-(2-hydroxy-3,5-di-t-pentylphenyl)ethyl]-4,6-di-t-pentylphenyl acrylate is more preferable.

The amount of the compound (G) to be added contained in the thermoplastic resin composition is appropriately adjusted according to the amount of the chemical structure (E) contained in the thermoplastic resin composition, molding processing conditions of the thermoplastic resin composition, and the like. Even in a case where the amount of the compound (G) to be added is an extremely small amount, the thermal decomposition resistance of the thermoplastic resin composition during the molding processing can be improved. However, in order to sufficiently improve the thermal decomposition resistance, the amount of the compound (G) to be added is preferably 0.001% by mass or more, more preferably 0.01% by mass or more, still more preferably 0.1 % by mass or more, and particularly preferably 0.2% by mass or more with respect to the total 100% by mass of the thermoplastic resin compositions. In addition, in order to prevent deterioration in mechanical strength, contamination of a metal mold due to bleed-out, or the like of the thermoplastic resin composition, the amount of the compound (G) to be added is preferably 6% by mass or less and more preferably 3% by mass or less with respect to the total 100% by mass of the thermoplastic resin composition.

In addition, the amount of the compound (G) to be added contained in the thermoplastic resin composition is preferably adjusted in consideration of the content of the chemical structure (E). In a case where the molar ratio of the chemical structure (E) and the compound (G), which are contained in the thermoplastic resin composition, is represented by chemical structure (E):compound (G) = 1:X, a value of X is preferably 0.01 or more and 100 or less. In addition, the value of X is preferably 0.01 or more, more preferably 0.05 or more, and still more preferably 0.2 or more. Furthermore, the value of X is preferably 100 or less, more preferably 30 or less, and still more preferably 10 or less. In a case where the value of X is 0.01 or more, the effect of improving the thermal decomposition resistance of the thermoplastic resin composition is exhibited. In a case where the value of X is 100 or less, deterioration in physical properties of the molded body consisting of the thermoplastic resin composition is suppressed, and the cost can be reduced.

### [Content of chemical structure (E) contained in thermoplastic resin composition]

The content of the chemical structure (E) contained in the thermoplastic resin composition can be confirmed by ¹H-NMR measurement. Specifically, an integrated value of a proton peak of the trans position of the terminal double bond portion of the chemical structure (E) is confirmed, and a molar concentration of the chemical structure (E) contained in the thermoplastic resin composition is calculated. For example, it is known that when R⁰ of the chemical structure (E) in Formula (3) is a methyl group and the monomer unit adjacent to the chemical structure (E) is a methacrylate unit, the proton peak of the trans position of the terminal double bond group derived from the chemical structure (E) is observed at 5.48 ppm, and in a case where R⁰ is a methyl group and the monomer unit adjacent to the chemical structure (E) is an acrylate unit, the proton peak of the trans position is observed at 5.54 ppm (Reference: J. Polym. Sci: Part A: Polym. Chem., Vol. 41, p. 645 to 654 (2003)).

For example, a case where the number average molecular weight of the macromonomer (A) having the chemical structure (E), which has been obtained from gel permeation chromatography (GPC) measurement, is 3,000 [g/mol] and the introduction rate of the terminal double bond, which was confirmed by ¹H-NMR measurement, is 99% or more, is considered. A molar concentration (millimolar concentration) of the terminal double bond of the macromonomer (A) in this case is 1 ÷ 3,000 × 1,000 = 0.333 [mmol/g].

In this way, the molar concentration of the chemical structure (E) contained in the thermoplastic resin composition can be calculated. When calculating the content of the chemical structure (E) in the copolymer (C) or the mixture of the copolymer (C) and the polymer (M), the molar concentration of the chemical structure (E) can be calculated by adding a standard substance and comparing during the ¹H-NMR measurement.

### [Polymer (M)]

The thermoplastic resin composition according to the embodiment of the present invention can contain a polymer (M) different from the macromonomer (A) represented by Formula (1) and/or the copolymer (C) containing the structural unit derived from Formula (1), as necessary. It is preferable that the polymer (M) does not have the chemical structure (E). For example, it is preferable that the thermoplastic resin composition contains the polymer (M) as one main component, and is used in combination with the macromonomer (A) and/or the copolymer (C). As described above, when the compound (F) contained in the thermoplastic resin composition is a compound which does not exhibit thermoplasticity, the thermoplastic resin composition needs to contain the thermoplastic resin (X), and thus the polymer (M) needs to be the thermoplastic resin (X). Even when the compound (F) is a polymer which is a thermoplastic resin, it is preferable that the polymer (M) is a thermoplastic resin. In this case, as the polymer (M), a general-purpose thermoplastic resin can be used without particular limitation. Examples of the polymer (M) include polymethyl methacrylate, polycarbonate, rigid polyvinyl chloride, soft polyvinyl chloride, polyolefin, polyurethane, polyester, polystyrene, acrylonitrile-styrene copolymer (AS resin), acrylonitrilebutadiene-styrene copolymer (ABS resin), methyl methacrylate-styrene copolymer (MS resin), and the like. Among these, at least one selected from the group consisting of polymethyl methacrylate, polycarbonate, polyvinyl chloride, polyolefin, polyurethane, and polyester is preferable, polymethyl methacrylate or polycarbonate is more preferable, and polymethyl methacrylate is most preferable. These polymers (M) may be used alone or in combination of a plurality of types thereof.

Some polymers (M) will be specifically further described. The polymethyl methacrylate is a polymer containing a methyl methacrylate unit in an amount of 80% by mass or more, and is also referred to as a methacrylic resin. Examples of the polymethyl methacrylate include ACRYPET (trade name) manufactured by Mitsubishi Chemical Corporation and the like. Examples of typical varieties of ACRYPET include VH, MD, MF, VH5, TF8, TF9, VH6, VHM, VHS, SV, VH4, TN100, and the like.

The polycarbonate includes an aromatic polycarbonate and an aliphatic polycarbonate. Examples of the aromatic polycarbonate include polycarbonate having a bisphenol-A skeleton. Furthermore, examples of the aliphatic polycarbonate include polycarbonate containing an isosorbide skeleton, such as DURABIO (trade name) manufactured by Mitsubishi Chemical Corporation. Examples of a typical variety of DURABIO include D7340R, D6350R, D5360R, D5380R, and the like.

The polyvinyl chloride (PVC) includes a rigid PVC and a soft PVC, and is a resin composition containing a reinforcing agent, a plasticizer, a stabilizer, and the like. Examples of the PVC include straight polymer (series name) manufactured by Shin-Etsu Chemical Co., Ltd., and the like. Examples of a typical variety of the Shin-Etsu PVC straight polymer include TK-500, TK-600, TK-700, TK-800, TK-1000, TK-1300, TK-1400, and the like. Examples of an additive such as a reinforcing agent and a processing aid include METABLEN (trade name) manufactured by Mitsubishi Chemical Corporation, and the like. Examples of a typical variety of METABLEN suitable for PVC include P type, L-1000, S-2001, W-300A, W-450A, W-377, C-223A, C-215A, C-201A, C-140A, F-410, H-602, and the like. Examples of the plasticizer include DOP, DINP, and TOTM of J-PLUS Co., Ltd., DINCH of BASF, and the like. Examples of the stabilizer include a composite metal soap-based stabilizer such as a Ba-Zn-based stabilizer, a Ca-Zn-based stabilizer, a Ba-Ca-Sn-based stabilizer, a Ca-Mg-Sn-based stabilizer, a Ca-Zn-Sn-based stabilizer, a Pb-Sn-based stabilizer, and a Pb-Ba-Ca-based stabilizer. Examples of the age resistor include an epoxy compound typified by an epoxidized vegetable oil such as epoxidized soybean oil and epoxidized linseed oil.

When the thermoplastic resin composition contains the polymer (M), the content of the polymer (M) is preferably 10% to 95% by mass, more preferably 20% to 90% by mass, and still more preferably 30% to 80% by mass in the total 100% by mass of the thermoplastic resin composition. In a case where the proportion of the polymer (M) is within the above-described range, the characteristics of the polymer (M) can be imparted to the thermoplastic resin composition.

### [Additive (D)]

The thermoplastic resin composition according to the embodiment of the present invention can be added with an additive (D) as necessary. As the additive (D), various additives excluding the compound (G) can be selected. Examples of the additive (D) include various stabilizers such as an antioxidant, an ultraviolet absorber, and a thermal stabilizer; coloring agents such as an inorganic pigment, an organic pigment, and a dye; conductive imparting agents such as carbon black and ferrite; an inorganic filler; a lubricant; a mold release agent; a plasticizer; an organic peroxide; a neutralizing agent; a crosslinking agent; and a reinforcing agent.

When adding the additive (D), the proportion of the additive (D) is preferably 20% by mass or less and more preferably 10% by mass or less with respect to 100% by mass of the resin composition. By setting the proportion of the additive (D) to 20% by mass or less, the properties inherent to the thermoplastic resin composition are maintained.

The total content (% by mass) of the compound (F), the compound (G), and the additive (D) with respect to the total amount of the thermoplastic resin composition is not more than 100% by mass.

### [Method of manufacturing thermoplastic resin composition]

A method for manufacturing the thermoplastic resin composition according to the embodiment of the present invention is not particularly limited, and a mixing method or a melt-kneading method of a resin that is generally used can be applied. The thermoplastic resin composition is manufactured by mixing and/or kneading the compound (F) and the compound (G) as essential components, a polymer (M) to be added as necessary, and the like. Examples of a mixing method of the resin and/or a melt-kneading method include a Henschel mixer, a Banbury mixer, a V-type mixer, a ribbon blender, a roll mill, a single screw extruder, a twin screw extruder, and the like. These methods for manufacturing can be appropriately combined.

### [Molded material and molded body using thermoplastic resin composition]

The thermoplastic resin composition according to the embodiment of the present invention is suitably used as various molded materials because of having favorable thermal decomposition resistance during molding processing. As the molded material, the molded body can be manufactured by heating a thermoplastic resin composition to have fluidity that allows molding processing, imparting a desired shape, and then cooling and curing the composition.

A method of obtaining a molded body using the molded material according to the embodiment of the present invention is not particularly limited, and a molding method generally used can be applied. As the molding method, for example, the molded material can be processed into various molded bodies by a molding method such as an injection molding method (including an insert molding method, a two-color molding method, a sandwich molding method, a gas injection molding method, and the like), an extrusion molding method, an inflation molding method, a T-die film molding method, a laminate molding method, a blow molding method, a hollow molding method, a compression molding method, and a calender molding method. Among these, from the viewpoint that heat resistance is desired, injection molding or extrusion molding is preferable, and injection molding is particularly preferable. A shape of the molded body is not particularly limited, and examples thereof include a sheet, a film, a plate, a particle, a lump, a fiber, a rod, a porous body, a foam, and the like. In addition, the molded film can also be uniaxially or biaxially stretched. Examples of the stretching method include a roll method, a tenter method, a tubular method, and the like. Furthermore, a surface treatment such as a corona discharge treatment, a flame treatment, a plasma treatment, or an ozone treatment, which is usually industrially used, can also be performed.

Since the thermoplastic resin composition according to the embodiment of the present invention has favorable thermal decomposition resistance during molding processing, the low-molecular-weight components such as a monomer and an oligomer, which are generated from decomposition of a polymer, are small. Therefore, the molded material including the resin composition according to the embodiment of the present invention and the molded body obtained by molding the molded material have a small amount of the low-molecular-weight component. From such characteristics, in the molded material according to the embodiment of the present invention and/or the molded body, deterioration in appearance, deterioration in mechanical properties, deterioration in optical performance, and the like due to the gas generation during the molding processing are suppressed. In addition, the eluted substances can be reduced in an eluted substance test required for food packaging, medical packaging, food manufacturing equipment, pharmaceutical manufacturing equipment, medical equipment, peripheral equipment, and components. In addition, in the molded material and/or the molded body, the odor is reduced during storage, during molding processing, and during use.

### [Application]

The application of the molded body including the resin composition according to the embodiment of the present invention is not particularly limited, and as an example, examples thereof include the following applications. That is, examples of the application include a wire, a cord, coating material such as a wire harness, an insulating sheet, a display or a touch panel of an OA device, a membrane switch, a photo cover, a relay component, a coil bobbin, an IC socket, a fuse case, a camera pressure plate, an FDD collet, a floppy hub in the field of electrical and electronic members; a light disk substrate, a pickup lens for an optical disk, an optical lens, an LCD substrate, a PDP substrate, a television screen for a projection television, a retardation film, a fog lamp lens, an exposure switch lens, a sensor switch lens, a fresnel lens, protective glasses, a projection lens, a camera lens, sunglasses, a light guide plate, a camera strobe reflector, an LED reflector in the field of optical member; a headlamp lens, a turn signal lamp lens, a tail lamp lens, a resin window glass, a meter cover, an outer panel, a door handle, a rear panel, a wheel cap, a visor, a roof rail, a sunroof, an instrument panel, panels, control cable covering material, an air bag cover, a mud guard, a bumper, boots, an air hose, lamp packings, gaskets, various moldings such as a window molding, a site shield, a weather strip, a glass run channel, grommets in the vehicle member; joint material, a handrail, a window, table edge material, a sash, a bathtub, a window frame, a signboard, a lighting cover, a water tank, a stair waist board, a carport, a highway sound barrier, a multi-wall sheet, steel wire covering material, a lighting lamp globe, a switch breaker, a protective cover of machine tool, an industrial deep drawing vacuum forming container, a pump housing in the vibration damping and sound insulating member and building materials field; various packings, grips, belts, rubber feet, rollers, protectors, a suction cup, gaskets of a refrigerator or the like, switches, connector covers, game machine covers, pachinko tables, OA housings, notebook PC housings, HDD head trays, instrument windows, transparent housings, rollers with OA gears, switch case sliders, gas cock knobs, clock frames, gear trains of clocks, amber caps, various rolls for OA device in the field of home appliances and light electric appliances; tubular molded bodies such as hoses and tubes, special-shaped extruded products, leather-like products, a fastener, toys such as dolls with a soft texture, pen grips, straps, suction cups, clocks, umbrella bones, cosmetic cases, general goods such as toothbrush handles, housewares, containers such as a tupperware, binding bands, infusion bottles obtained by blow molding, various bottles such as food bottles, water bottles, and personal care bottles for cosmetics and the like; catheters, syringes, syringe gaskets, droppers, tubes, ports, caps, rubber stoppers, dialyzers, blood connectors, dentures, disposable containers, and the like in medical members. In addition, the molded body is also applicable to application by foam molding.

The applications of the molded body including the thermoplastic resin composition according to the embodiment of the present invention in the field of film and sheet are not particularly limited, but examples thereof include the following applications. That is, the examples include packaging stretch film, commercial or household wrap film, pallet stretch film, stretch label, shrink film, shrink label, sealant film, retort film, retort sealant film, aroma retaining heat seal film, sealant for A-PET, frozen food container and lid, cap seal, heat-welding film, heat-bonding film, heat-sealing film, sealant film for bag-in-box, retort pouch, standing pouch, spout pouch, laminated tube, heavy-duty sack, and fiber wrapping film in the field of packing of food and sundries; film for house and multi film in the field of agricultural film; infusion bag, multi-chamber vessel such as high calorie infusion, continuous ambulatory peritoneal dialysis (CAPD), and antibiotic kit bag, drainage bag for peritoneal dialysis, blood bag, urine bag, surgery bag, ice pillow, ampoule case, and PTP packaging in the medical film and sheet fields; civil water impermeable sheet, waterproofing material, mat, joint material, floor materials, roofing, decorative films, skin films, and wallpaper in the building material related fields; leather, ceiling materials, trunk room linings, interior skin materials, vibration control sheets, and sound insulation sheets in the field of the vehicle member; display covers, battery cases, mouse pads, mobile phone cases, IC card cases, floppy disk cases, and CD-ROM cases in the light electric appliance field; toothbrush cases, puff cases, cosmetic cases, medicinal cases such as eye drop cases, tissue cases, and face pack cases in the toiletry and sanitary field; film and sheets for stationary, clear files, pen cases, notebook covers, desk mats, keyboard covers, book covers, and binders in the office supplies related fields; furniture leather, toys such as beach balls, rain gear such as umbrellas and rain coats, table cloths, blister package, bath lid, towel case, fancy case, tag case, pouch, amulet bag, insurance card cover, passbook case, passport case, and knife case in the field of sundries for general household; retroreflective sheet; synthetic paper; and the like. In addition, examples of the pressure sensitive adhesive composition or the field of film and sheet in which the pressure sensitive adhesive material is applied to a base material to impart tackiness include a carrier tape, a pressure-sensitive adhesive tape, a marking film, a semiconductor or glass dicing film, a surface protective film, steel sheet/plywood protective film, automobile protective film, packaging/bundling adhesive tape, office/household adhesive tape, bonding adhesive tape, paint masking adhesive tape, surface protective adhesive tape, sealing adhesive tape, anticorrosion/waterproofing adhesive tape, electrical insulating adhesive tape, electronic device adhesive tape, adhesive film, adhesive film for medical/sanitary materials such as adhesive plaster base material film, identification/decorative adhesive tape, display tape, packaging tape, surgical tape, adhesive tapes for labels, and the like.

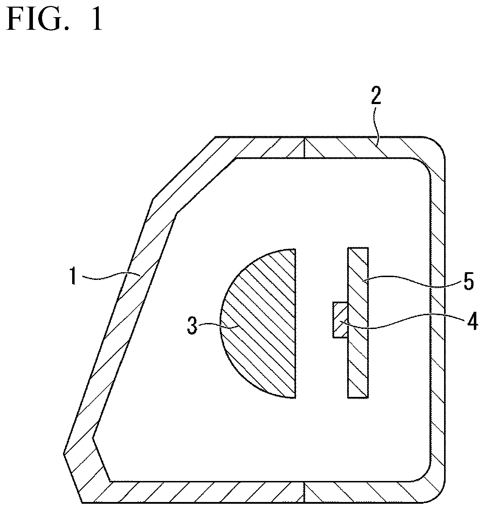

FIG. 1 is a schematic cross-sectional view showing an example of a lamp using a lamp cover as a vehicle member formed of the thermoplastic resin composition according to the embodiment of the present invention. FIG. 1 is an example of a headlamp cover using an LED light source as a light source, and the lamp cover 1 protects a headlight of a vehicle and emits light by diffusing light of the LED light source at a high brightness. The lamp cover 1 in FIG. 1 has a structure in which the lamp cover 1 is disposed in front of the projection lens 3 to protect the projection lens 3 disposed in front of the LED light source 4 fixed on the support substrate 5, and the lamp chamber is formed by the lamp cover 1 and the housing 2. The lamp cover 1 is formed of the thermoplastic resin composition according to the embodiment of the present invention. The housing 2 and the support substrate 5 may be formed of the thermoplastic resin composition according to the embodiment of the present invention, or may be formed of other thermoplastic resin compositions.

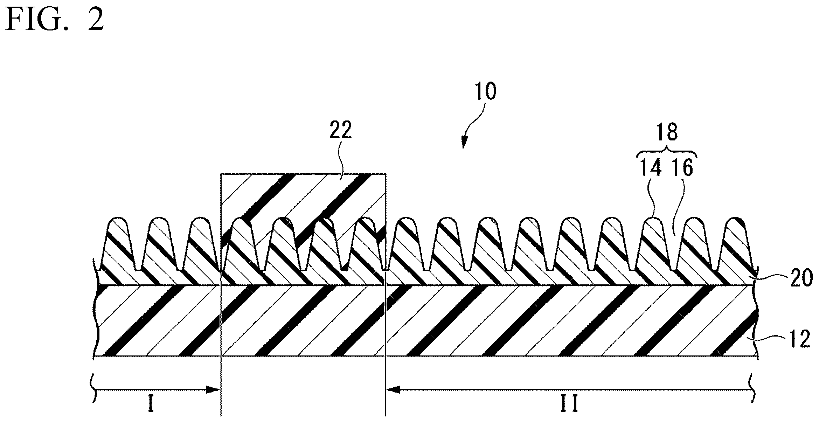

FIG. 2 is a schematic cross-sectional view showing an example of a touch panel as an electrical and electronic member formed of the thermoplastic resin composition according to the embodiment of the present invention. The fine uneven structure body 10 as the touch panel of FIG. 2 includes a base material 12; a cured resin layer 20 which is formed on a surface of the base material 12 and has, on a surface of the cured resin layer 20, a fine uneven structure 18 consisting of a plurality of convex portions 14 and a plurality of concave portions 16 formed between the plurality of convex portions 14; and a weir portion 22 which is formed on the fine uneven structure 18 of the cured resin layer 20 and extends along a surface of the cured resin layer 20 to divide the surface of the cured resin layer 20 into a region I and a region II. The base material 12 is formed of the thermoplastic resin composition according to the embodiment of the present invention. The cured resin layer 20 may be formed of the thermoplastic resin composition according to the embodiment of the present invention, or may be formed of other thermoplastic resin compositions.

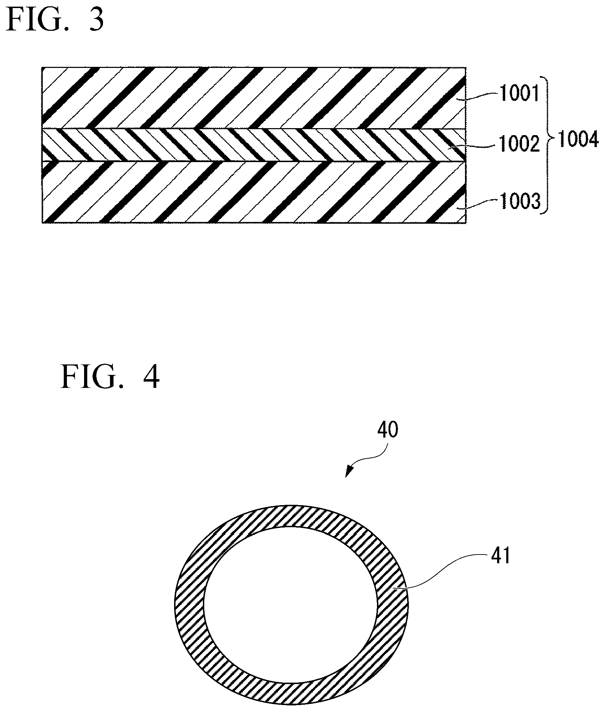

FIG. 3 is a schematic cross-sectional view showing an example of a light guide plate for image display as an optical member formed of the thermoplastic resin composition according to the embodiment of the present invention. In the light guide plate for image display 1004 of FIG. 3, in the thickness direction, the first resin base material 1001, the hologram layer 1002, and the second resin base material 1003 are disposed in this order. At least one of the first resin base material 1001 or the second resin base material 1003 is formed of the thermoplastic resin composition according to the embodiment of the present invention. The remaining other may be formed of the thermoplastic resin composition according to the embodiment of the present invention, or may be formed of other thermoplastic resin compositions.

FIG. 4 is a schematic cross-sectional view showing an example of a tube as a medical member formed of the thermoplastic resin composition according to the embodiment of the present invention. A tube 40 in FIG. 4 has a resin layer 41 formed of the thermoplastic resin composition according to the embodiment of the present invention, and the inside of the tube 40 is hollow.

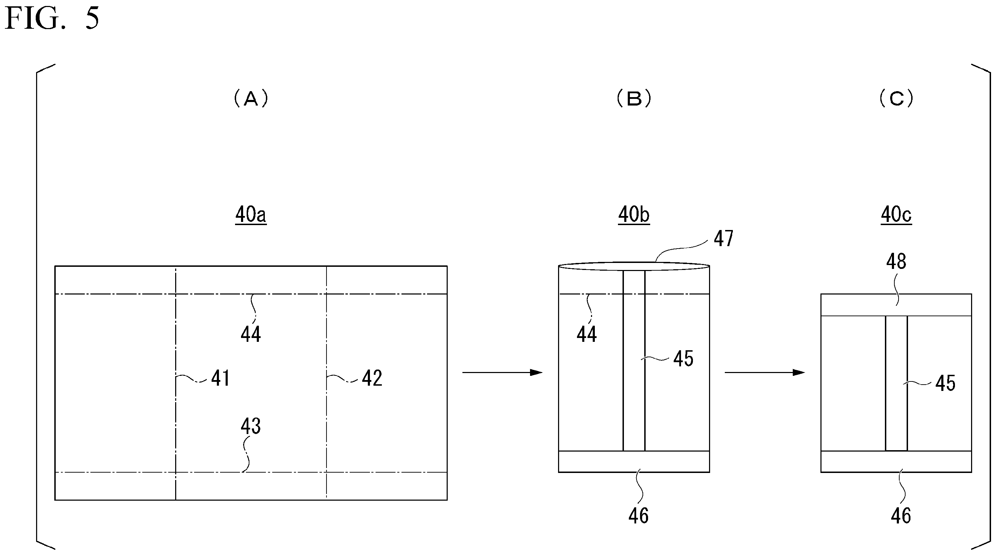

FIG. 5 is a plan view showing an example of a double bag packaging body as a food packaging formed of the thermoplastic resin composition according to the embodiment of the present invention. The double bag packaging body 40c shown in FIG. 5 may be produced by the following steps. The single leaf 30a is a single leaf 40a with a crease in which creases 41 to 44 are formed at the positions of the one-dot chain line shown in FIG. 5(A). In the single leaf 40a with the crease, both ends on the left and right sides are folded toward the center side by the creases 41 and 42. In addition, the lower end part is folded back to the upper side along the crease 43. By these folding, the overlapping parts 45 of the right and left single leaves 40a and the part 46 in which and the lower end parts are folded and overlapped is heat-sealed to produce an intermediate product 40b.

The intermediate product 40b represented by FIG. 5(B) is a container having an opening 47 at an upper part. The object to be accommodated, such as food, is accommodated inside the intermediate product 40b from the opening 47, the opening 47 is folded downward along the crease 44, and the overlapping part 48 generated by the folding is heat-sealed to produce a double bag packaging body 40c with the accommodated object.

The single leaf 30a is formed of the thermoplastic resin composition according to the embodiment of the present invention.

A 5% weight reduction temperature (°C) of the thermoplastic resin composition containing the macromonomer (A) as the compound (F), which is defined by the measuring method described in Examples, is preferably 250°C to 400°C, more preferably 260°C to 350°C, and still more preferably 270°C to 330°C.

An improvement width (°C) of the 5% weight reduction temperature of the thermoplastic resin composition containing the macromonomer (A) as the compound (F), which is calculated and defined by the measuring method described in Examples, is preferably 30°C or more, more preferably 30°C to 80°C, and still more preferably 35°C to 70°C.

A 5% weight reduction temperature (°C) of the thermoplastic resin composition containing the copolymer (C) as the compound (F), which is defined by the measuring method described in Examples, is preferably 250°C to 500°C, more preferably 260°C to 400°C, and still more preferably 270°C to 350°C.

An improvement width (°C) of the 5% weight reduction temperature of the thermoplastic resin composition containing the copolymer (C) as the compound (F), which is calculated and defined by the measuring method described in Examples, is preferably 1°C to 150°C, more preferably 3°C to 100°C, and still more preferably 5°C to 90°C.

### Examples

Hereinafter, the present invention will be described in more detail with reference to examples and comparative examples, but the present invention is not limited to the following examples.

In Examples, "part" represents "part by mass" or "part by weight".

### <Evaluation method>

Evaluations in Examples and Comparative Examples were carried out according to the following method.

### (Mass average molecular weight (Mw) and number average molecular weight (Mn) of macromonomer (A))

The mass average molecular weight (Mw) and the number average molecular weight (Mn) of the macromonomers (A) obtained in examples and comparative examples were measured by a gel permeation chromatography (GPC) method. 10 mg of the obtained copolymer was dissolved in 10 ml of tetrahydrofuran, and a solution filtered through a 0.45 µm filter was used as a sample for GPC measurement.

A polymer measurement guard column (trade name: TSK-GUARD COLUMN SUPER H-H, manufactured by Tosoh Corporation) and two polymer measurement columns (trade name: TSK-GEL SUPER HM-H, manufactured by Tosoh Corporation) were connected to a gel permeation chromatography measuring device (model name: HLC-8320 type, manufactured by Tosoh Corporation) in series and used.

In addition, a refractive index detector (RI) was used as a detector. The measurement was carried out under conditions of a separation column temperature of 40°C, a flow rate of a moving layer of 0.6 mL/min, and a sample injection amount of 10 µl using tetrahydrofuran as the moving layer. A calibration curve was created using a plurality of kinds of polymethyl methacrylates with known molecular weights (manufactured by Polymer Laboratories, peak molecular weight (Mp) of 1,560 to 19,500,000) as standard polymers, and the Mw and the Mn were acquired.

### (Mass average molecular weight (Mw) and number average molecular weight (Mn) of copolymer(C))

The mass average molecular weight (Mw) and the number average molecular weight (Mn) of the copolymers (C) obtained in examples and comparative examples were measured by a gel permeation chromatography (GPC) method. 10 mg of the obtained copolymer was dissolved in 10 ml of tetrahydrofuran, and a solution filtered through a 0.45 µm filter was used as a sample for GPC measurement. In the GPC measurement of the copolymers, a polymer measurement guard column (trade name: TSK-GUARD COLUMN SUPER H-H, manufactured by Tosoh Corporation) and one ultrahigh molecular weight measurement column (trade name: TSK-GEL GMHHR-H, manufactured by Tosoh Corporation) were connected to a high performance liquid chromatography measuring device (model name: HLC-8320 type, manufactured by Tosoh Corporation) in series and used.

In addition, a refractive index detector (RI) was used as a detector. The measurement was carried out under conditions of a separation column temperature of 40°C, a flow rate of a moving layer of 0.6 mL/min, and a sample injection amount of 10 µl using tetrahydrofuran as the moving layer. A calibration curve was created using a plurality of kinds of polymethyl methacrylates with known molecular weights (manufactured by Polymer Laboratories, peak molecular weight (Mp) of 1,560 to 19,500,000) as standard polymers, and the mass average molecular weight (Mw) and the number average molecular weight (Mn), which are relative molecular weights in terms of polymethyl methacrylate, were acquired.

### (Molar concentration of chemical structure (E))

The molar concentration of the chemical structure (E) was obtained by ¹H-NMR measurement. In addition, the introduction rate of the terminal double bond group of the macromonomer (A) was obtained by comparing the concentration of the chemical structure (E) with the number average molecular weight (Mn) obtained by GPC. The ¹H-NMR measurement was carried out using a nuclear magnetic resonance apparatus. The measurement conditions are shown below.
Apparatus: JNM-ECZ400 (manufactured by JEOL Ltd.)
Heavy solvent: heavy chloroform (manufactured by Sigma-Aldrich Co., LLC)
Sample preparation: 1.0 g of heavy chloroform was added to 0.010 g of the macromonomer (A) or the macromonomer copolymer.
Measurement conditions: number of times of integration of 2048 and measurement temperature of 23°C

### (Thermal decomposition resistance evaluation)

The thermal decomposition resistance was evaluated by tracking the weight reduction of the sample using a thermogravimetric/differential thermal analysis apparatus. The 5% weight reduction temperature is a temperature at which the weight is reduced by 5% in a case where the weight at the start of the measurement is set to 100%. The improvement width of the 5% weight reduction temperature was calculated by subtracting the 5% weight reduction temperature in a case where the compound (G) was not added from the 5% weight reduction temperature in a case where the compound (G) was added. The measurement conditions are shown below.
Apparatus: STA7300 manufactured by Hitachi High-Tech Science Corporation
Measurement conditions: nitrogen gas flow of 200 mL/min, 110°C to 550°C, and temperature rising rate of 10°C/min

### [Raw materials to be used]

Abbreviations and manufacturers of compounds used in the following manufacturing examples, examples, and comparative examples are as follows.
MMA: methyl methacrylate [manufactured by Mitsubishi Chemical Corporation]
MA: methyl acrylate [manufactured by Mitsubishi Chemical Corporation]
PHMA: phenyl methacrylate [manufactured by Mitsubishi Chemical Corporation]
BA: n-butyl acrylate [manufactured by Mitsubishi Chemical Corporation]
St: styrene [manufactured by FUJIFILM Wako Pure Chemical Corporation]
MEA: 2-methoxyethyl acrylate [manufactured by Osaka Organic Chemical Industry Ltd., product name 2-MTA]
PEROCTA O [manufactured by NOF CORPORATION]
AMBN: 2,2'-azobis(2-methylbutyronitrile) [manufactured by FUJIFILM Wako Pure Chemical Corporation, product name V59]
V-601: dimethyl 2,2'-azobis(2-methylpropionate) [manufactured by FUJIFILM Wako Pure Chemical Corporation, product name]
nOM: n-octyl mercaptan (manufactured by Kanto Chemical Co., Inc.)
Sumilizer GS: 2-[1-(2-hydroxy-3,5-di-t-pentylphenyl)ethyl]-4,6-di-t-pentylphenyl acrylate (manufactured by SUMITOMO CHEMICAL COMPANY, LIMITED, product name)
ADEKA STAB AO-60: pentaerythritol tetrakis[3-(3,5-di-t-butyl-4-hydroxyphenyl)propionate] (manufactured by ADEKA CORPORATION, product name)
ADEKA STAB 2112: tris(2,4-di-t-butylphenyl)phosphite (manufactured by ADEKA CORPORATION, product name)
Tinuvin 770DF: bis(2,2,6,6-tetramethyl-4-piperidyl) sebacate (manufactured by BASF SE, product name)
Sumilizer TP-D: pentaerythritol tetra(3-dodecylthiopropionate) (manufactured by SUMITOMO CHEMICAL COMPANY, LIMITED, product name)

### [Manufacturing examples of macromonomer (A) and evaluation of Thermal decomposition resistance]

### [Manufacturing Example 1: synthesis of dispersant (1)]

A reactor equipped with a stirrer, a cooling pipe, and a thermometer was charged with 61.6 parts of an aqueous solution of 17% by mass potassium hydroxide, 19.1 parts of methyl methacrylate, and 19.3 parts of deionized water. Next, the solution in the reactor was stirred at room temperature, the exothermic peak was checked, and the solution was stirred for 4 hours. Thereafter, the reaction solution in the reactor was cooled to room temperature, thereby obtaining an aqueous potassium methacrylate solution.

Next, a polymerization device equipped with a stirrer, a cooling pipe, and a thermometer was charged with 900 parts of deionized water, 70 parts of an aqueous solution of 42% by mass sodium 2-sulfoethyl methacrylate (product name: ACRYESTER SEM-Na, manufactured by Mitsubishi Chemical Corporation), 16 parts of the aqueous potassium methacrylate solution, and 7 parts of methyl methacrylate, the mixture was stirred, and the liquid in the reactor was heated to 50°C while the air in the polymerization device was substituted with nitrogen. 0.053 parts of V-50 (manufactured by FUJIFILM Wako Pure Chemical Corporation, 2,2'-azobis(2-methylpropionamidine) dihydrochloride, product name) serving as a polymerization initiator was added to the polymerization device, and the liquid in the reactor was heated to 60°C. After the charging of the polymerization initiator, 1.4 parts of methyl methacrylate was dividedly added 5 times (total amount of methyl methacrylate of 7 parts) every 15 minutes. Thereafter, the liquid in the polymerization device was maintained at 60°C for 6 hours while being stirred, and cooled to room temperature, thereby obtaining a dispersant (1) having a solid content of 8% by mass, which was a transparent aqueous solution.

### [Manufacturing Example 2: synthesis of chain transfer agent (1)]

2.00 g (8.03 mmol) of cobalt (II) acetate tetrahydrate (manufactured by FUJIFILM Wako Pure Chemical Corporation, Wako Special Grade), 3.86 g (16.1 mmol) of diphenylglyoxime (manufactured by Tokyo Chemical Industry Co., Ltd., EP grade), and 100 ml of diethyl ether deoxidized by nitrogen bubbling in advance were added to a synthesizer equipped with a stirrer in a nitrogen atmosphere, and stirred at room temperature for 2 hours.

Next, 20 ml of a boron trifluoride diethyl ether complex (manufactured by Tokyo Chemical Industry Co., Ltd., EP grade) was added thereto, and the mixture was further stirred for 6 hours. The obtained mixture was filtered, and the solid was washed with diethyl ether, and dried at 20°C and 100 MPa or less for 12 hours, thereby obtaining 5.02 g (7.93 mmol, yield of 99% by mass) of a chain transfer agent (1) of a brown solid.

### [Manufacturing Example 3: synthesis of macromonomer (A-1)]

145 parts of deionized water, 0.13 parts of sodium sulfate (Na₂SO₄), and 0.26 parts of the dispersant (1) (10% by mass of solid content) manufactured in Manufacturing Example 1 were added to a polymerization device equipped with a stirrer, a cooling pipe, and a thermometer, and the resultant mixture was stirred to obtain a uniform aqueous solution. Next, 100 parts of MMA, 0.0045 parts (45 ppm) of the chain transfer agent (1) manufactured in Manufacturing Example 2, and 0.5 parts of PEROCTA O (1,1,3,3-tetramethylbutyl peroxy-2-ethylhexanoate manufactured by NOF Corporation, trade name) as a polymerization initiator were added thereto to obtain an aqueous dispersion liquid.

Next, the air inside the polymerization device was sufficiently substituted with nitrogen, and the aqueous dispersion liquid was heated to 80°C and maintained for 4 hours, and heated to 92°C and maintained for 2 hours. Thereafter, the reaction solution was cooled to 40°C to obtain an aqueous suspension of the macromonomer. The aqueous suspension was filtered through a filter cloth, and the filtrate was washed with deionized water and dried at 40°C for 16 hours, thereby obtaining a macromonomer (A-1). In the macromonomer (A-1), Mn was 3,200, Mw was 7,800, and the terminal double bond introduction rate was more than 99%.

### [Manufacturing Examples 4 to 6: synthesis of macromonomers (A-2) to (A-4)]

By the same manner as in Manufacturing Example 3, the charging conditions were changed to the contents shown in Table 1, thereby macromonomers (A-1) to (A-4) were synthesized. The results are summarized in Table 1.

**[Table 1]**

| | | | Unit | Manufacturing Example 3 | Manufacturing Example 4 | Manufacturing Example 5 | Manufacturing Example 6 |
|---|---|---|---|---|---|---|---|
| Name of macromonomer (A) | | | - | A-1 | A-2 | A-3 | A-4 |
| Charging | Monomer | MMA | Part by mass | 100 | 95 | 95 | 81 |
| | | PHMA | Part by mass | | | | 14 |
| | | MA | Part by mass | | 5 | 5 | 5 |
| | Chain transfer agent | Chain transfer agent (1) | Part by mass | 0.0045 | 0.0014 | 0.0010 | 0.0015 |
| | Polymerization initiator | PEROCTA O | Part by mass | 0.50 | 0.25 | 0.10 | 0.30 |
| Polymerization result | GPC | Number average molecular weight Mn | | 3,200 | 21,300 | 15,000 | 20,700 |
| | | Mass average molecular weight Mw | | 7,800 | 39,100 | 36,000 | 38,000 |
| | Terminal double bond introduction rate | | | > 99% | > 99% | > 99% | > 99% |

### [Example 1: thermal decomposition resistance evaluation]

99 parts by mass of the macromonomer (A-1) synthesized in Manufacturing Example 1 and 1.0 part by mass of Sumilizer GS (manufactured by SUMITOMO CHEMICAL COMPANY, LIMITED, product name) corresponding to the compound (G) were dissolved in tetrahydrofuran (THF) and mixed with each other, and then the mixture was vacuum-dried at room temperature to remove THF, thereby obtaining a sample of a thermoplastic resin composition. The obtained sample was used to perform the thermal decomposition resistance evaluation. The evaluation results are summarized in Table 2.

### [Examples 2 to 4 and Comparative Examples 1 to 5]

By the same manner as in Example 1, the charging conditions were changed to the contents shown in Table 2, thereby obtaining each sample of the thermoplastic resin composition. Using each of the obtained samples, the thermal decomposition resistance evaluation was performed by the same manner as in Example 1. The evaluation results are summarized in Table 2.

**[Table 2]**

| | | | Unit | Example 1 | Example 2 | Example 3 | Example 4 | Comparative Example 1 | Example 2 | Comparative Example 3 | Comparative Example 4 | Comparative Example 5 |
|---|---|---|---|---|---|---|---|---|---|---|---|---|
| | Macromonomer (A) | A-1 | Part by mass | 99 | | | | 100 | 99 | 99 | 99 | 99 |
| | | A-2 | Part by mass | | 99 | | | | | | | |
| | | A-3 | Part by mass | | | 99 | | | | | | |
| | | A-4 | Part by mass | | | | 99 | | | | | |
| Resin composition | Compound (G) | Sumilizer GS | Part by mass | 1.0 | 1.0 | 1.0 | 1.0 | | | | | |
| | Additive (D) | ADEKA STAB AO-60 | Part by mass | | | | | | 1.0 | | | |
| | | ADEKA STAB 2112 | Part by mass | | | | | | | 1.0 | | |
| | | Tinuvin 770DF | Part by mass | | | | | | | | 1.0 | |
| | | Sumilizer TP-D | Part by mass | | | | | | | | | 1.0 |
| Molar concentration | Molar concentration of macromonomer (A) | | mmol/g | 0.3094 | 0.0660 | 0.0478 | 0.0465 | 0.3125 | 0.3094 | 0.3094 | 0.3094 | 0.3094 |
| | Molar concentration of compound (G) | | mmol/g | 0.0182 | 0.0182 | 0.0182 | 0.0182 | 0.0000 | 0.0000 | 0.0000 | 0.0000 | 0.0000 |
| Molar ratio | Terminal double bond group (E):compound (G) = 1:X | | Value of X | 0.06 | 0.28 | 0.38 | 0.39 | 0.00 | 0.00 | 0.00 | 0.00 | 0.00 |
| Thermal decomposition resistance evaluation | 5% weight reduction temperature | | °C | 276 | 303 | 303 | 295 | 241 | 241 | 208 | 232 | 248 |
| | Improvement width of 5% weight reduction temperature | | °C | 54 | 55 | 66 | 41 | | 19 | -14 | 10 | 26 |

In Example 1, by adding the compound (G) to the macromonomer (A-1), the 5% weight reduction temperature was improved by 54°C as compared with a case of adding nothing in Comparative Example 1. Also when the compound (G) was added to the macromonomers (A-2) to (A-4) in Examples 2 to 4, the 5% weight reduction temperature was significantly improved similarly. On the other hand, in all of a case where ADEKA STAB AO-60, which is a general phenol-based antioxidant, was used in Comparative Example 2 without using the compound (G), a case where ADEKA STAB 2112, which is a general phosphorus-based antioxidant, was used in Comparative Example 3 without using the compound (G), a case where Tinuvin 770DF, which is a general hindered amine-based light stabilizer (HALS), was used in Comparative Example 4 without using the compound (G), and a case where Sumilizer TP-D, which is a general sulfur-based antioxidant, was used in Comparative Example 5 without using the compound (G), the sufficient effect of improving the thermal decomposition resistance was not obtained. Therefore, it was found that, in a case where the compound (G) was added, the thermal decomposition resistance of the macromonomer (A) was remarkably improved. That is, it is considered that the addition of the compound (G) can stop the depolymerization of the macromonomer (A).

### [Manufacturing Example of copolymer (C) and thermal decomposition resistance evaluation]

### [Manufacturing Example 7: synthesis of copolymer (C-1)]

50 parts of the macromonomer (A-2) obtained in Manufacturing Example 4, 150 parts of deionized water, 0.26 parts of the dispersant (1), and 0.3 parts of sodium sulfate were added to a polymerization device equipped with a stirrer, a cooling pipe, and a thermometer, and the mixture was stirred to obtain an aqueous suspension. Next, the inside of the polymerization device was heated to 70°C, and then 41.5 parts of BA and 8.5 parts of St were slowly added thereto. Thereafter, the mixture was maintained at 70°C for 1 hour with being stirred to dissolve the macromonomer (A-2) in BA and St, thereby obtaining a dispersion liquid. Next, the inside the polymerization device was cooled to 40°C, 0.5 parts of the radical polymerization initiator AMBN was added thereto, the solution was stirred for 30 minutes for dissolution. Next, the air inside the polymerization device was sufficiently substituted with nitrogen, and the aqueous dispersion liquid was heated to 82°C and maintained for 4 hours, and heated to 90°C and maintained for 1 hour. After the dispersion liquid was cooled to 40°C or less, the dispersion liquid was filtered through a filter cloth, and the filtrate was washed with deionized water. Thereafter, the filtrate was dried using a hot air circulating dryer at 40°C for 12 hours to obtain a bead-like copolymer (C-1). Table 3 shows the charging formulation and the polymerization results of the copolymer.

### [Manufacturing Example 8: synthesis of copolymer (C-2)]

A reactor equipped with a stirrer, a cooling pipe, and a thermometer was charged with 145 parts of deionized water, 0.36 parts of sodium sulfate, 1.25 parts of the dispersant (1) manufactured in Manufacturing Example 1, 40 parts of the macromonomer (A-3) manufactured in Manufacturing Example 5, 60 parts of MEA, and 0.2 parts of nOM, and the charged mixture was heated to 55°C while being stirred, thereby obtaining a composition in a syrup dispersion state. The composition was cooled to 40°C or less, and then 0.12 parts of V-601 was dissolved in the composition to obtain a polymerizable composition in a syrup dispersion state. Next, the temperature of the syrup dispersion liquid was increased to 75°C and held for 2 hours. Thereafter, the temperature was increased to 85°C and held for 90 minutes. The suspension was cooled to 40°C or less and filtered, and the filtrate was washed with deionized water and dried at 70°C for 12 hours to obtain a copolymer (C-2). The polymerization results are shown in Table 3.

### [Manufacturing Example 9: synthesis of copolymer (C-3)]

145 parts of deionized water, 0.13 parts of sodium sulfate, and 0.26 parts of a dispersant (1) manufactured in Manufacturing Example 1 were mixed to prepare a water dispersion medium for suspension polymerization. The total of 100 parts of 40 parts of the macromonomer (A-4) manufactured in Manufacturing Example 6, 42.6 parts of BA, and 17.4 parts of St were charged into a separable flask with a cooling pipe, and heated to 60°C with stirring to obtain a raw material syrup. The raw material syrup was cooled to 40°C or less, and then 0.5 parts of AMBN was dissolved in the raw material syrup to obtain a syrup. Next, the water dispersion medium for suspension polymerization was added to the syrup, and then the syrup dispersion liquid was obtained by increasing a stirring rotation speed while bubbling nitrogen into the separable flask to replace the atmosphere in the separable flask with nitrogen. The syrup dispersion liquid was heated to 82°C and maintained for 5 hours. Thereafter, the syrup dispersion liquid was heated to 90°C and maintained for 30 minutes to complete the polymerization, thereby obtaining a suspension. The suspension was cooled to 40°C or less, and then the suspension was filtered through a filter cloth, and the filtrate was washed with deionized water and dried at 40°C for 16 hours to obtain a copolymer (C-3). The polymerization results are shown in Table 3.

**[Table 3]**

| | | | | Unit | Manufacturing Example 7 | Manufacturing Example 8 | Manufacturing Example 9 |
|---|---|---|---|---|---|---|---|
| Name of macromonomer copolymer | | | | | Copolymer (C-1) | Copolymer (C-2) | Copolymer (C-3) |
| | Polymerizable component | Macromonomer (A) | A-2 | Part by mass | 50 | | |
| | | | A-3 | Part by mass | | 40 | |
| | | | A-4 | Part by mass | | | 40 |
| | | Comonomer (B) | BA | Part by mass | 41.5 | | 42.6 |
| | | | St | Part by mass | 8.5 | | 17.4 |
| | | | MEA | Part by mass | | 60 | |
| | Radical polymerization initiator | | AMBN | Part by mass | 0.5 | | 0.5 |
| | | | V-601 | Part by mass | | 0.12 | |
| | Chain transfer agent | | nOM | Part by mass | | 0.2 | |
| | Polymerization temperature | | | °C | 80 | 75 | 82 |
| | Polymerization time | | | hr | 5 | 2 | 5 |
| Polymerization result | GPC | Mass average molecular weight Mw | | | 1,782,700 | 300,000 | 546,100 |
| | NMR | Molar concentration of terminal double bond | | mmol/g | 0.0070 | 0.0024 | 0.0064 |

### [Example 5]

99.9 parts by mass of the copolymer (C-1) obtained in Manufacturing Example 7 and 0.1 parts by mass of Sumilizer GS (manufactured by SUMITOMO CHEMICAL COMPANY, LIMITED, product name) were dissolved in tetrahydrofuran (THF) and mixed with each other, and then the mixture was vacuum-dried at room temperature to remove THF, thereby obtaining a sample of a thermoplastic resin composition. The obtained sample was used to perform the thermal decomposition resistance evaluation. The evaluation results are summarized in Table 4.

### [Examples 6 to 12 and Comparative Examples 6 to 8]

By the same manner as in Example 5, the charging conditions were changed to the contents shown in Table 4, thereby obtaining each sample of the thermoplastic resin composition. Using each of the obtained samples, the thermal decomposition resistance evaluation was performed by the same manner as in Example 5. The evaluation results are summarized in Tables 4 and 5.

### [Reference Example 1]

145 parts of deionized water, 0.1 parts of sodium sulfate (Na₂SO₄), and 0.26 parts of the dispersant (1) (10% by mass of solid content) manufactured in Manufacturing Example 1 were added to a polymerization device equipped with a stirrer, a cooling pipe, and a thermometer, and the resultant mixture was stirred to obtain a uniform aqueous solution. Next, 95 parts of the MMA, 5 parts of the MA, 0.6 parts of 1-octanethiol as a chain transfer agent, and 0.1 parts of AMBN as a polymerization initiator were added thereto to obtain an aqueous dispersion liquid.

Next, the air inside the polymerization device was sufficiently substituted with nitrogen, and the aqueous dispersion liquid was heated to 78°C and maintained for 3 hours, and heated to 92°C and maintained for 2 hours. Thereafter, the reaction solution was cooled to 40°C to obtain an aqueous suspension of the polymer. The aqueous suspension was filtered through a filter cloth, and the filtrate was washed with deionized water and dried at 40°C for 16 hours, thereby obtaining a copolymer (C-4) not containing the macromonomer (A). In the copolymer (C-4), Mn was 29,000, Mw was 47,500, and a terminal double bond was not confirmed. The copolymer (C-4) was dissolved in tetrahydrofuran (THF) and mixed, and then the mixture was vacuum-dried at room temperature to remove THF, thereby obtaining a sample of a thermoplastic resin composition. Using the obtained sample, the thermal decomposition resistance evaluation was performed by the same manner as in Example 5. The evaluation results are shown in Table 5.

### [Reference Example 2]

145 parts of deionized water, 0.1 parts of sodium sulfate (Na₂SO₄), and 0.26 parts of the dispersant (1) (10% by mass of solid content) manufactured in Manufacturing Example 1 were added to a polymerization device equipped with a stirrer, a cooling pipe, and a thermometer, and the resultant mixture was stirred to obtain a uniform aqueous solution. Next, 100 parts of MMA, 0.6 parts of 1-octanethiol as a chain transfer agent, and 0.1 parts of AMBN as a polymerization initiator were added thereto to obtain an aqueous dispersion liquid.

Next, the air inside the polymerization device was sufficiently substituted with nitrogen, and the aqueous dispersion liquid was heated to 78°C and maintained for 3 hours, and heated to 92°C and maintained for 2 hours. Thereafter, the reaction solution was cooled to 40°C to obtain an aqueous suspension of the polymer. The aqueous suspension was filtered through a filter cloth, and the filtrate was washed with deionized water and dried at 40°C for 16 hours, thereby obtaining a copolymer (C-5) not containing the macromonomer (A). In the copolymer (C-5), Mn was 28,500, Mw was 46,400, and a terminal double bond was not confirmed. The copolymer (C-5) was dissolved in tetrahydrofuran (THF) and mixed, and then the mixture was vacuum-dried at room temperature to remove THF, thereby obtaining a sample of a thermoplastic resin composition. Using the obtained sample, the thermal decomposition resistance evaluation was performed by the same manner as in Example 5. The evaluation results are shown in Table 5.

**[Table 4]**

| | | | Unit | Example 5 | Example 6 | Example 7 | Example 8 | Example 9 | Example 10 | Example 11 | Example 12 |
|---|---|---|---|---|---|---|---|---|---|---|---|
| Resin composition | Polymer | Copolymer (C-1) | Part by mass | 99.9 | 99.8 | 99.0 | | | | | |
| | | Copolymer (C-2) | Part by mass | | | | 99.9 | 99.0 | | | |
| | | Copolymer (C-3) | Part by mass | | | | | | 99.9 | 99.8 | 99.0 |
| | | Copolymer (C-4) | Part by mass | | | | | | | | |
| | | Copolymer (C-5) | Part by mass | | | | | | | | |
| | Compound (G) | Sumilizer GS | Part by mass | 0.1 | 0.2 | 1.0 | 0.1 | 1.0 | 0.1 | 0.2 | 1.0 |
| Molar concentration | Molar concentration of terminal double bond | | mmol/g | 0.0070 | 0.0070 | 0.0070 | 0.0024 | 0.0024 | 0.0064 | 0.0064 | 0.0063 |
| | Molar concentration of compound (G) | | mmol/g | 0.0018 | 0.0036 | 0.0182 | 0.0018 | 0.0182 | 0.0018 | 0.0036 | 0.0182 |
| Molar ratio | Terminal double bond group (E):compound (G) = 1:X | | Value of X | 0.26 | 0.52 | 2.61 | 0.76 | 7.67 | 0.29 | 0.57 | 2.89 |
| Thermal decomposition resistance evaluation | 5% weight reduction temperature | | °C | 287 | 290 | 333 | 337 | 351 | 293 | 301 | 343 |
| | Improvement width of 5% weight reduction temperature | | °C | 39 | 42 | 85 | 7 | 21 | 15 | 23 | 65 |

**[Table 5]**

| | | | Unit | Comparative Example 6 | Comparative Example 7 | Comparative Example 8 | Reference Example 1 | Reference Example 2 |
|---|---|---|---|---|---|---|---|---|
| Resin composition | Polymer | Copolymer (C-1) | Part by mass | 100.0 | | | | |
| | | Copolymer (C-2) | Part by mass | | 100.0 | | | |
| | | Copolymer (C-3) | Part by mass | | | 100.0 | | |
| | | Copolymer (C-4) | Part by mass | | | | 100.0 | |
| | | Copolymer (C-5) | Part by mass | | | | | 100.0 |
| | Compound (G) | Sumilizer GS | Part by mass | - | - | - | - | - |
| Molar concentration | Molar concentration of terminal double bond | | mmol/g | 0.0070 | 0.0027 | 0.0064 | 0.0000 | 0.0000 |
| | Molar concentration of compound (G) | | mmol/g | 0.0000 | 0.0000 | 0.0000 | 0.0000 | 0.0000 |
| Molar ratio | Terminal double bond group (E):compound (G) = 1:X | | Value of X | 0.00 | 0.00 | 0.00 | 0.00 | 0.00 |
| Thermal decomposition resistance evaluation | 5% weight reduction temperature | | °C | 248 | 330 | 278 | 337 | 327 |
| | Improvement width of 5% weight reduction temperature | | °C | | | | | |

It was found that from Examples 5 to 7 and Comparative Example 6, the thermal decomposition resistance was improved by adding the compound (G) to the copolymer (C-1). Next, it was found that from Examples 8 and 9 and Comparative Example 7, the thermal decomposition resistance was improved by adding the compound (G) to the copolymer (C-2). Next, it was found that from Examples 10 to 12 and Comparative Example 8, the thermal decomposition resistance was improved by adding the compound (G) to the copolymer (C-3). It was found that from Reference Examples 1 and 2, in a case of a copolymer or a polymer not containing the macromonomer (A) represented by Formula (1) and/or the copolymer (C) containing the structural unit derived from Formula (1), the copolymer or the polymer exhibited favorable thermal decomposition resistance, and the problem to be solved by the present invention does not occur. However, in a case of these copolymers or polymers, it is not possible to solve the problems of the (meth)acrylic block copolymers or homopolymers in the related art.

### [Thermal decomposition resistance evaluation of thermoplastic resin composition]

Polymethyl methacrylate, polycarbonate, polyvinyl chloride, polyolefin, polyurethane, or polyester was added to the thermoplastic resin composition obtained in each of Examples, and the thermal decomposition resistance evaluation was performed in the same manner as in Example 5. Even when containing the polymer (M), favorable thermal decomposition resistance was obtained without impairing the effects of the thermoplastic resin composition obtained in each example. In particular, in a case where the content of the polymer (M) is 10% to 95% by mass with respect to the total amount of the thermoplastic resin composition, similarly to the thermoplastic resin composition obtained in each Example, favorable thermal decomposition resistance was obtained.

### Industrial availability

According to the present invention, a thermoplastic resin composition having favorable thermal decomposition resistance, a molded material, and a molded body obtained by molding the molded material, can be obtained.

### Reference Signs List

1: lamp cover
2: housing
3: projection lens
4: LED light source
5: support substrate
10: fine uneven structure body
12: base material
14: convex portion
16: concave portion
18: fine uneven structure
20: cured resin layer
22: weir portion
I: region I
II: region II
1001: first resin base material
1002: hologram layer
1003: second resin base material
1004: light guide plate for image display
40: tube
41: resin layer
40a: single leaf (with crease)
40b: intermediate product
40c: double bag packaging body
41, 42, 43, 44: crease
45, 46, 48: overlapping part
47: opening

## Claims

1. A thermoplastic resin composition comprising:
a compound (F) which is at least one selected from the group consisting of a macromonomer (A) represented by Formula (1) and a copolymer (C) containing a structural unit derived from the macromonomer (A) represented by Formula (1); and
a compound (G) represented by Formula (2), 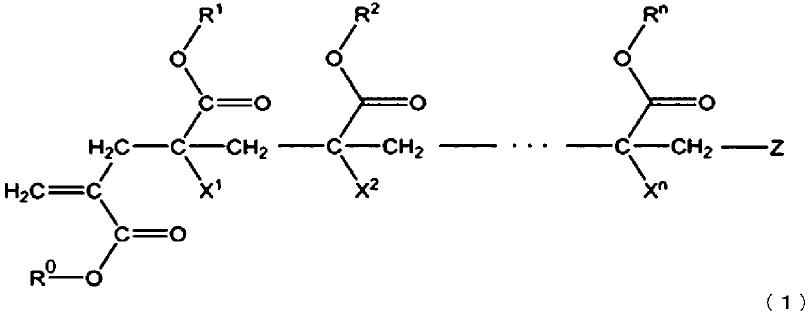
(in Formula (1), R⁰ to Rⁿ each independently represent a hydrogen atom, an alkyl group, a cycloalkyl group, an aryl group, or a heterocyclic group, X¹ to Xⁿ each independently represent a hydrogen atom or a methyl group, Z represents a terminal group, and n represents a natural number of 1 to 10,000), 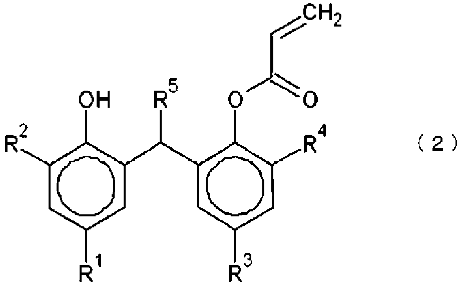
(in Formula (2), R¹ to R⁴ each independently represent an alkyl group having 1 to 5 carbon atoms, and R⁵ represents an alkyl group having 1 to 5 carbon atoms, or a hydrogen atom).

2. The thermoplastic resin composition according to Claim 1,
wherein the thermoplastic resin composition contains the copolymer (C), and
the copolymer (C) has a chemical structure (E) represented by Formula (3), 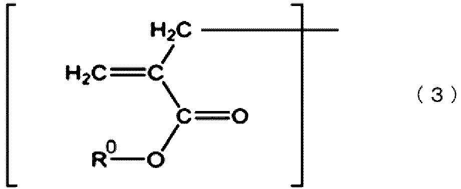
(in Formula (3), R⁰ represents a hydrogen atom, an alkyl group, a cycloalkyl group, an aryl group, or a heterocyclic group).

3. The thermoplastic resin composition according to Claim 1 or 2,
wherein the compound (F) has a chemical structure (E) represented by Formula (3), and
in a case where a molar ratio of the chemical structure (E) and the compound (G) is represented by the chemical structure (E):the compound (G) = 1:X, X is 0.01 or more and 100 or less, preferably X is 0.05 or more and 30 or less, more preferably X is 0.2 or more and 10 or less, 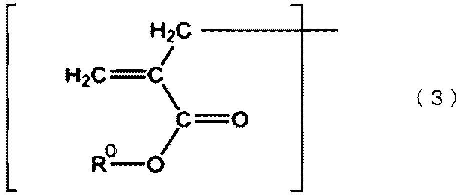
(in Formula (3), R⁰ represents a hydrogen atom, an alkyl group, a cycloalkyl group, an aryl group, or a heterocyclic group).

4. The thermoplastic resin composition according to any one of Claims 1 to 3, further comprising:
a polymer (M) different from the compound (F), wherein the polymer (M) is preferably at least one selected from the group consisting of polymethyl methacrylate, polycarbonate, polyvinyl chloride, polyolefin, polyurethane, and polyester.

5. The thermoplastic resin composition according to Claim 4,
wherein a content of the polymer (M) is 10% to 95% by mass with respect to a total amount of the thermoplastic resin composition.

6. Use of the thermoplastic resin composition according to any one of Claims 1 to 5 for injection molding or extrusion molding.

7. A molded material comprising:
the thermoplastic resin composition according to any one of Claims 1 to 5.

8. A molded body comprising the molded material according to Claim 7.

9. A vehicle member comprising the molded material according to Claim 7.

10. An electrical and electronic member comprising the molded material according to Claim 7.

11. An optical member comprising the molded material according to Claim 7.

12. A medical member comprising the molded material according to Claim 7.

13. A food packaging comprising the molded material according to Claim 7.

14. A method for manufacturing a molded body, comprising:
molding the molded material according to Claim 7 to obtain a molded body.

15. The method for manufacturing a molded body according to Claim 14,
wherein the molding is injection molding or extrusion molding.

## Patentansprüche

1. Eine thermoplastische Harzzusammensetzung, umfassend:
eine Verbindung (F), bei der es sich um mindestens eine, ausgewählt aus der Gruppe bestehend aus einem Makromonomer (A), dargestellt durch Formel (1), und einem Copolymer (C), das eine von dem Makromonomer (A), dargestellt durch Formel (1), abgeleitete Struktureinheit enthält, handelt; und
eine Verbindung (G), dargestellt durch Formel (2), 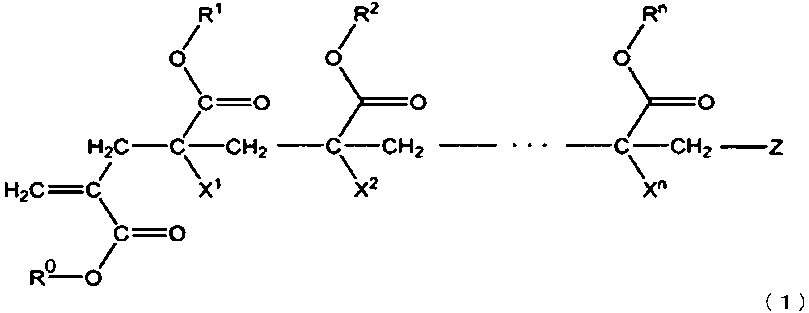
(in Formel (1) stellen R⁰ bis Rⁿ jeweils unabhängig ein Wasserstoffatom, eine Alkylgruppe, eine Cycloalkylgruppe, eine Arylgruppe oder eine heterocyclische Gruppe dar, X¹ bis Xⁿ stellen jeweils unabhängig ein Wasserstoffatom oder eine Methylgruppe dar, Z stellt eine Endgruppe dar und n stellt eine natürliche Zahl von 1 bis 10.000 dar), 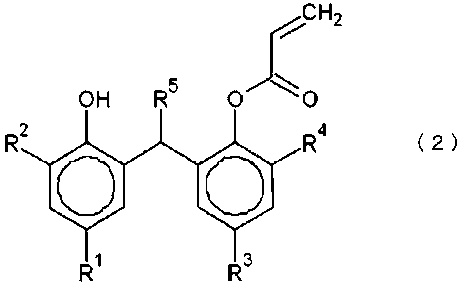
(in Formel (2) stellen R¹ bis R⁴ jeweils unabhängig eine Alkylgruppe mit 1 bis 5 Kohlenstoffatomen dar und R⁵ stellt eine Alkylgruppe mit 1 bis 5 Kohlenstoffatomen oder ein Wasserstoffatom dar).

2. Die thermoplastische Harzzusammensetzung nach Anspruch 1,
wobei die thermoplastische Harzzusammensetzung das Copolymer (C) enthält und das Copolymer (C) eine chemische Struktur(E), dargestellt durch Formel (3), aufweist, 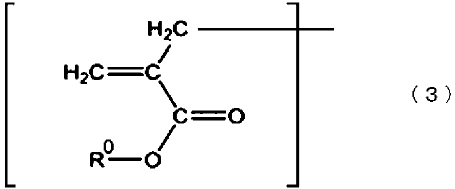
(in Formel (3) stellt R⁰ ein Wasserstoffatom, eine Alkylgruppe, eine Cycloalkylgruppe, eine Arylgruppe oder eine heterocyclische Gruppe dar).

3. Die thermoplastische Harzzusammensetzung nach Anspruch 1 oder 2,
wobei die Verbindung (F) eine chemische Struktur (E), dargestellt durch Formel (3), aufweist, und
in einem Fall, in dem ein Molverhältnis der chemischen Struktur (E) und der Verbindung (G) durch die chemische Struktur (E):die Verbindung (G) = 1:X dargestellt ist, X 0,01 oder mehr und 100 oder weniger beträgt, vorzugsweise X 0,05 oder mehr und 30 oder weniger beträgt, noch bevorzugter X 0,2 oder mehr und 10 oder weniger beträgt, 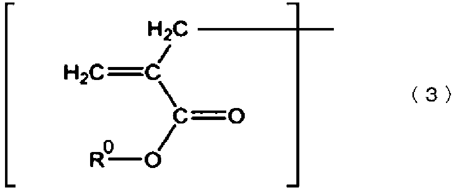
(in Formel (3) stellt R⁰ ein Wasserstoffatom, eine Alkylgruppe, eine Cycloalkylgruppe, eine Arylgruppe oder eine heterocyclische Gruppe dar).

4. Die thermoplastische Harzzusammensetzung nach einem der Ansprüche 1 bis 3, ferner umfassend:
ein von der Verbindung (F) verschiedenes Polymer (M), wobei das Polymer (M) vorzugsweise mindestens eines, ausgewählt aus der Gruppe bestehend aus Polymethylmethacrylat, Polycarbonat, Polyvinylchlorid, Polyolefin, Polyurethan und Polyester, ist.

5. Die thermoplastische Harzzusammensetzung nach Anspruch 4,
wobei ein Gehalt des Polymers (M) 10 bis 95 Massen-%, bezogen auf eine Gesamtmenge der thermoplastischen Harzzusammensetzung, beträgt.

6. Verwendung der thermoplastischen Harzzusammensetzung nach einem der Ansprüche 1 bis 5 zum Spritzgießen oder Strangpressen.

7. Ein geformtes Material, umfassend:
die thermoplastische Harzzusammensetzung nach einem der Ansprüche 1 bis 5.

8. Ein Formkörper, umfassend das geformte Material nach Anspruch 7.

9. Ein Fahrzeugbauteil, umfassend das geformte Material nach Anspruch 7.

10. Ein elektrisches und elektronisches Bauteil, umfassend das geformte Material nach Anspruch 7.

11. Ein optisches Bauteil, umfassend das geformte Material nach Anspruch 7.

12. Ein medizinisches Bauteil, umfassend das geformte Material nach Anspruch 7.

13. Eine Lebensmittelverpackung, umfassend das geformte Material nach Anspruch 7.

14. Ein Verfahren zur Herstellung eines Formkörpers, umfassend:
Formen des geformten Materials nach Anspruch 7, um einen Formkörper zu erhalten.

15. Das Verfahren zur Herstellung eines Formkörpers nach Anspruch 14,
wobei das Formen Spritzgießen oder Strangpressen ist.

## Revendications

1. Composition de résine thermoplastique comprenant :
un composé (F) qui est au moins l'un choisi dans l'ensemble constitué par un macromonomère (A) représenté par la formule (1) et un copolymère (C) contenant un motif structurel dérivé du macromonomère (A) représenté par la formule (1) ; et
un composé (G) représenté par la formule (2), 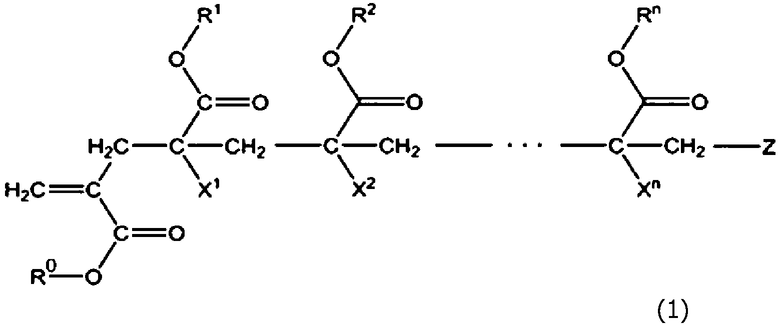
(dans la formule (1), chacun de R⁰ à Rⁿ représente indépendamment un atome d'hydrogène, un groupe alkyle, un groupe cycloalkyle, un groupe aryle, ou un groupe hétérocyclique, chacun de X¹ à Xⁿ représente indépendamment un atome d'hydrogène ou un groupe méthyle, Z représente un groupe terminal, et n représente un entier naturel de 1 à 10 000), 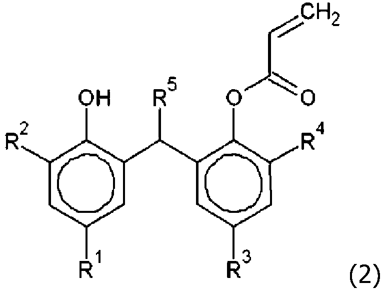
(dans la formule (2), chacun de R¹ à R⁴ représente indépendamment un groupe alkyle ayant 1 à 5 atomes de carbone, et R⁵ représente un groupe alkyle ayant 1 à 5 atomes de carbone, ou un atome d'hydrogène).

2. Composition de résine thermoplastique selon la revendication 1,
dans laquelle la composition de résine thermoplastique contient le copolymère (C), et
le copolymère (C) a une structure chimique (E) représentée par la formule (3), 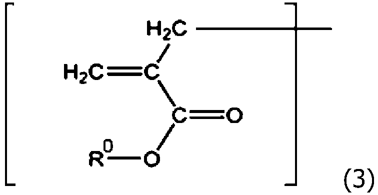
(dans la formule (3), R⁰ représente un atome d'hydrogène, un groupe alkyle, un groupe cycloalkyle, un groupe aryle, ou un groupe hétérocyclique).

3. Composition de résine thermoplastique selon la revendication 1 ou 2,
dans laquelle le composé (F) a une structure chimique (E) représentée par la formule (3), et
dans le cas où le rapport molaire de la structure chimique (E) et du composé (G) est représenté par structure chimique (E) / composé (G) = 1/X, X vaut 0,01 ou plus et 100 ou moins, de préférence X vaut 0,05 ou plus et 30 ou moins, mieux encore X vaut 0,2 ou plus et 10 ou moins, 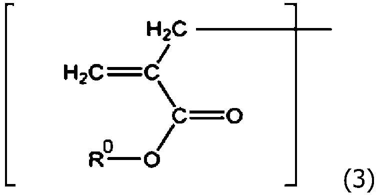
(dans la formule (3), R⁰ représente un atome d'hydrogène, un groupe alkyle, un groupe cycloalkyle, un groupe aryle, ou un groupe hétérocyclique).

4. Composition de résine thermoplastique selon l'une quelconque des revendications 1 à 3, comprenant en outre :
un polymère (M) différent du composé (F), lequel polymère (M) est de préférence au moins l'un choisi dans l'ensemble constitué par un poly(méthacrylate de méthyle), un polycarbonate, un poly(chlorure de vinyle), une polyoléfine, un polyuréthane, et un polyester.

5. Composition de résine selon la revendication 4,
dans laquelle la teneur en le polymère (M) est de 10 % à 95 % en masse par rapport à la quantité totale de la composition de résine thermoplastique.

6. Utilisation de la composition de résine thermoplastique selon l'une quelconque des revendications 1 à 5 pour un moulage par injection ou un moulage par extrusion.

7. Matériau moulé comprenant :
la composition de résine thermoplastique selon l'une quelconque des revendications 1 à 5.

8. Corps moulé comprenant le matériau moulé selon la revendication 7.

9. Elément de véhicule comprenant le matériau moulé selon la revendication 7.

10. Elément électrique et électronique comprenant le matériau moulé selon la revendication 7.

11. Elément optique comprenant le matériau moulé selon la revendication 7.

12. Elément médical comprenant le matériau moulé selon la revendication 7.

13. Emballage alimentaire comprenant le matériau moulé selon la revendication 7.

14. Procédé pour fabriquer un corps moulé, comprenant :
le moulage du matériau moulé selon la revendication 7 pour que soit obtenu un corps moulé.

15. Procédé pour fabriquer un corps moulé selon la revendication 14,
dans lequel le moulage est un moulage par injection ou un moulage par extrusion.
